(19) **Europäisches Patentamt**
**European Patent Office**
**Office européen des brevets**

(11) **EP 4 636 652 A1**

(12) # EUROPEAN PATENT APPLICATION

(43) Date of publication:
**22.10.2025 Bulletin 2025/43**

(21) Application number: **25171474.7**

(22) Date of filing: **18.04.2025**

(51) International Patent Classification (IPC):
**G06N 3/08** (2023.01)    **G06N 20/00** (2019.01)

(52) Cooperative Patent Classification (CPC):
**G06N 20/00; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.04.2024 US 202463635817 P**

(71) Applicants:
• **Meshcapade GmbH**
**72072 Tübingen (DE)**
• **Max-Planck-Gesellschaft zur Förderung der Wissenschaften e.V.**
**80539 München (DE)**

(72) Inventors:
• **Feng, Yao**
**72076 Tübingen (DE)**
• **Liu, Weiyang**
**72070 Tübingen (DE)**
• **Lin, Jing**
**Shenzhen City, 51800 (CN)**
• **Black, Michael**
**72076 Tübingen (DE)**

(74) Representative: **Cameron Intellectual Property Ltd**
**Moncrieff House**
**69 West Nile Street**
**Glasgow G1 2QB (GB)**

(54) **LANGUAGE-DRIVEN 3D HUMAN UNDERSTANDING WITH RETRIEVAL-AUGMENTED TOOL REASONING**

(57)    A language-driven system that integrates the capabilities of specialized methods into a unified framework. ChatHuman functions as an assistant proficient in utilizing, analyzing, and interacting with tools specific to 3D human tasks, adeptly discussing and resolving related challenges. Built on a Large Language Model (LLM) framework, ChatHuman is trained to autonomously select, apply, and interpret a diverse set of tools in response to user inputs. Our approach overcomes significant hurdles in adapting LLMs to 3D human tasks, including the need for domain-specific knowl- edge and the ability to interpret complex 3D outputs. The innovations of ChatHuman include leveraging academic publications to instruct the LLM on tool usage, employing a retrieva-laugmented generation model to create in-context learning examples for managing new tools, and effectively discriminating between and integrating tool results by transforming specialized 3D outputs into comprehensible formats.

FIG. 18

**Description**

**Cross-Reference to Related Applications**

This application claims priority to and the benefit of U.S. Provisional Patent Application No. 63/635,817, filed on April 18, 2024, the disclosure of which is hereby incorporated herein by reference in its entirety.

**Technical Field**

The application related to the field of three-dimensional ("3D") modeling and, more specifically to a system for modeling human features based on language prompts and tool reasoning.

**Background**

Research on 3D humans has progressed rapidly, resulting in the creation of many tools that can perform tasks like estimating a human's 3D pose from a single image, predicting face/body shapes, capturing emotions, and identifying regions of touch/contact, generating human poses from text descriptions, and animating human images. Each of these tools, however, focuses on a specific problem, functioning as isolated "specialists". Moreover, these separate tools cannot benefit from the expertise of others, and combining them to solve more complex tasks requires significant domain expertise. Ideally, the system would have a single model that can adaptively leverage different tools to solve complex 3D human-related problems while offering intuitive user interaction through natural language input. Recent work such as ChatPose [Feng et al., 2024] has taken initial steps in this direction, unifying pose generation, estimation, and general understanding within a large language model (LLM) framework. Unfortunately, ChatPose lacks the accuracy of the best specialist methods.

**Summary**

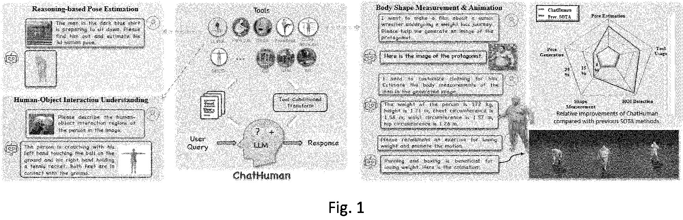

To address these issues, we built a multi-modal LLM, called ChatHuman, that specializes in using digital human modeling tools, enabling it to autonomously interpret instructions and complete diverse tasks related to 3D humans; see Fig. 1. Specifically, we taught an LLM to use a wide range of specialized human-related models for tasks like 3D pose estimation, emotion recognition, contact reasoning, and more, effectively extending the LLM's capabilities to the domain of 3D humans. This goes beyond providing a natural-language interface to these tools, as the LLM can use its broad understanding of humans to augment tool results or to analyze and integrate their outputs, providing better responses than any single tool alone.

With ChatHuman, we introduce a novel approach by finetuning an LLM to act as an agent that autonomously calls appropriate tools based on user inputs, completing tasks and enhancing responses with tool-generated results. Similar in spirit, recent works have employed off-the-shelf or fine-tuned LLMs for tasks like basic vision (e.g., Visual ChatGPT [Rasley et al., 2023]), mobile applications (e.g., AppAgent [Yang et al., 2023b]), biology (e.g., AmadeusGPT [Ye et al., 2023]) and system automation (e.g., GPT4Tools [Yang et al., 2023a]). Our work, however, differs by focusing specifically on the unique challenges of 3D human understanding. This domain requires precise, specialized terminology and a nuanced understanding of 3D-specific tools, which conventional LLMs lack. To teach the network this specialized terminology, we do what we would do as humans - the system has the LLM read the papers describing the methods. Even with that knowledge, the LLM needs to understand the task goals, select an appropriate tool or tools, interpret results, and resolve differing results. These skills are all beyond the abilities of general LLMs.

To address these challenges, the system follows a training pipeline: 1) the system utilizes relevant literature about the tools to familiarize the LLM with domain knowledge, helping it know when and how to use these tools; 2) After using a tool, the LLM evaluates the reliability of the outcome using its "judgment" and compares different methods to identify the most reliable results; 3) It combines these results with its general knowledge to create response. This pipeline represents several key innovations, laying a foundation for LLMs to effectively handle complex, tool-driven 3D human tasks.

Retrieval-Augmented Tool Use: Details about tools are typically present in corresponding academic papers. The system gives the LLM access to these papers and demonstrate that "reading the paper" improves tool use performance. The system further analyzes which paper sections are most effective for instructing tool use. When encountering a new tool, users often turn to the user guide for assistance.

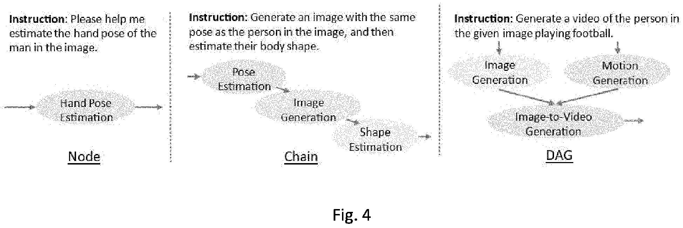

The system compiles the complete documentation for these tools and utilize a paperbased Retrieval-Augmented Generation (RAG) mechanism to improve the LLM's understanding and management of new tools. This means that, although the LLM has not encountered such tools during fine-tuning, it can still effectively use the new tools with the help of the paper-based RAG mechanism. In some cases, tasks require combining multiple tools. To address a broader range of tool usage scenarios, the system employs a graph-based invocation system, which includes a node for single-tool use, a chain for sequential tool execution, and a directed acyclic graphs (DAG) for multi-tool combinations as shown in Fig. 4.

3D Human-Related Tool Result Integration: Analyzing outputs from tools is crucial, as these outputs, such as body meshes, model parameters (e.g., SMPL pose), or motion sequences, are highly varied and complex. The Skinned Multi-Person Linear ("SMPL") model a realistic 3D model of the human body that is provided by Meshcapade GmbH, Tübingen Germany. To make these results compatible with our LLM analysis system, the system converts them into visual formats that the LLM can easily interpret. Guided by Cognitive Load Theory [Sweller et al., 2011], the system presents these outputs as multiple-choice options, streamlining the selection process and enhancing the LLM's effectiveness in handling 3D human-related tasks. Combined with the LLM's extensive general knowledge, these integrated results enable it to generate sophisticated responses about 3D humans.

Specifically, ChatHuman consists of a multimodal LLM LLaVA [Liu et al., 2023], and 26 tools involving 3D Humans and general vision tasks. The LLM is finetuned to use these tools and incorporate their results. User requests can be in the form of text descriptions, images (including video images) or other 3D information (if applicable), and the model produces text descriptions, images, or other 3D outputs after tool reasoning. Extensive evaluations demonstrate that ChatHuman not only surpasses previous models in tool-use accuracy but also improves performance on various human-related tasks. It achieves this by reasoning about multiple outputs, evaluating their veracity, and combining them with its own knowledge. Summarizing, our key contributions include: (1) a framework that leverages LLMs to interact with users and address human-centric tasks using specialist tools; (2) a scientific-paper-based RAG mechanism that ensures precise tool use by comprehending tool descriptions from scholarly articles, enhancing tool applications and interactions; and (3) the integration of tool outcomes with LLMs, enabling the LLM to effectively explain tool results and interact with users. Additionally, the LLM is fine-tuned to distinguish between optimal and suboptimal tool results, improving overall accuracy. ChatHuman achieves superior performance in tool use and human-related tasks compared with other LLM-based methods or task-specific methods. The code, trained models, and datasets are available for research purposes.

Aspects of the present disclosure relate to generating a description of a state of a three-dimensional object as described in a two-dimensional image by performing inferencing of given input data by using one or more tools. In particular, the present technology is directed to describing a 3D human in response to a given query. The given input query represents one or more modalities according to text, image, and/or encoded data.

In particular, the present technology provides a 3D human understanding agent as a multimodal agent application. Given an input query, the multimodal agent application automatically selects and uses one or more distinct types of 3D human analysis tools according to predetermined tool documents. The predetermined tool documents describe respective 3D human analysis tools. The multimodal agent further generates a response to the given inquiry based on respective output of analysis from the selected 3D analysis tools by tool-conditioned data transformation. Both the predetermined tool document and the tool-conditioned data transformation use a finetuned, pretrained large language model. Use of the finetuned pre-trained LLM enables the present case to selectively use the one or more distinct types of 3D human analysis tools and generate a consolidated response that describes a state of 3D human with accuracy.

In an embodiment, a computer-implemented system is disclosed for three-dimensional (3D) human understanding. The system includes a multimodal large language model (LLM) programmed to process user inputs, the user inputs comprising text, images, and/or 3D human-related data; a retrieval-augmented generation (RAG) module programmed to access research publications and tool documentation to guide the LLM selecting and utilizing a 3D human-related tool; and a tool generating module programmed to transform outputs from the selected 3D human-related tool into one or more formats compatible with the LLM, enabling the LLM to generate a response that integrates tool outputs with a general knowledge of the LLM.

The RAG module may be further programmed to retrieve one or more sections of research publications to inform the selected 3D human-related tool, the one or more sections including an abstract, an instruction, a method, and an experiment.

The tool integration module may be further programmed to present output from a plurality of tools as candidate tools for selecting a result, enabling the LLM to predict and select the result based on results from the candidate tools.

In an embodiment, the computer-implemented system supports multi-turn dialogues, enabling context-aware tool selection and utilization across multiple user interactions.

The 3D human understanding preferably describes a state of a human in three-dimensional space.

The 3D human-related tool preferably performs one or more of 3D pose estimation, emotion recognition, and reasoning about a 3D human being in contact with an object.

In an embodiment a computer-implemented method is disclosed for training a language-driven 3D human understanding model. The method includes the steps of: (i) obtaining documentation and research publications describing one or more tools for performing 3D human analysis; (ii) automatically extracting tool usage instructions, input/output formats, and capability descriptions of respective tools from the documentation and the research publications; (iii) generating a plurality of synthetic instruction-response training examples by prompting a base language model to simulate usage of the one or more tools based on the automatically extracted tool usage instructions; and (iv) finetuning the base language model using the generated training examples to generate a tool-augmented multimodal model, the tool-augmented multimodal model selects, invokes, and reasons over outputs of the one or more tools in response to receiving user queries.

The step of generating the plurality of synthetic instruction-response training examples may include employing a self-instruct strategy that uses a language model to generate both user queries and corresponding ideal responses involving one or more tools.

The step of finetuning may include providing the tool-augmented multimodal model with in-context learning examples that are dynamically retrieved from research document that are relevant to the one or more tools being integrated.

The step of automatically extracting tool usage instructions may include parsing structured document formats, including Application Programming Interface (API) specifications, JavaScript Object Notation) schema, or Python docstrings.

The tool-augmented multimodal model may, after being trained and finetuned, be programmed to generalized to a previously unseen tool by reasoning over newly retrieved documentation at inference time without performing additional parameter updates.

The method may include the further step of training the language-driven 3D human understanding model by using examples with multimodal inputs, wherein the multimodal inputs comprises at least one of natural language, 2S images, or 3D mesh representation.

The training may comprise examples of transforming raw tool outputs and natural language responses into one or more formats, enabling the model to abstract and summarize output the formats for end users.

The tool-augmented multimodal model preferably is a large language model.

In an embodiment, a device is provided for three-dimensional (3D) human understanding. The device includes a processor configured to execute operations including (i) processing, by a multimodal large language model (LLM), the user inputs, wherein the user inputs comprise text, images, and/or 3D human related data; (ii) accessing research publications and tool documentation to guide the LLM selecting and utilizing a 3D human-related tool; and (iii) transforming outputs from the selected 3D human-related tool into one or more formats compatible with the LLM, enabling the LLM to generate a response that integrates tool outputs with a general knowledge according to training of the LLM.

The processor may be configured to execute operations for retrieving one or more sections of research publications to inform the selected 3D human-related tool, the one or more sections including an abstract, an instruction, a method, and an experiment.

The processor may be configured to execute operations for presenting output from a plurality of tools as candidate tools for selecting a result, enabling the LLM to predict and select the result based on results from the candidate tools.

The processor may be configured to execute operations that supports multi-turn dialogues, enabling context-aware tool selection and utilization across multiple user interactions.

The 3D human understanding preferably describes a state of a human in three-dimensional space.

The 3D human-related tool performs one or more of 3D pose estimation, emotion recognition, and reasoning about a 3D human being in contact with an object.

Although the present disclosure primary discusses use for use in generating human-focused outputs, the present invention is also directly application to generating animal-focused outputs from animal-focused inputs and related data.

This Summary introduces a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

## Brief Description of Drawings

For the purpose of illustrating the invention, the drawings show a form of the invention that is presently preferred. However, it should be understood that the invention is not limited to the precise arrangement and instrumentalities shown in the drawings.

Fig. 1 illustrates the Chat Human LLM-based agent that uses a multimodal LLM to exploit and combine tools, discriminate their results, and integrate the results to solve tasks related to 3D Humans.

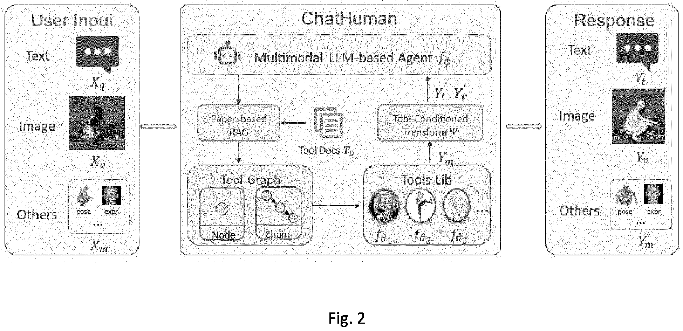

Fig. 2 illustrates the method overview. Given a user query, the multimodal LLM-based agent adopts a paper-based RAG mechanism to determine whether to employ tools and identify the optimal way to utilize them. After applying the tools, the tool results are transformed into a text or visual format and fed back to the agent to formulate responses.

Fig. 3 illustrates the paper-based Retrieval-Augmented Tool Usage. The system first feeds the academic papers of each tool to GPT-4 and build a document for each tool. During inference, given a user query, a relevant sample is retrieved from the documents and provided to the LLM-based agent as an in-context example to improve the tool usage accuracy.

Fig. 4 illustrates examples of tool use graphs. Tool use patterns include: a Node, which uses a single tool; a Chain, which requires sequential tool execution; and a DAG, which combines multiple tools.

Fig. 5 illustrates tool result integration. After tool invocation, results are transformed into VLM-compatible representations. The VLM then incorporates these transformed outputs to generate accurate, informative responses to user queries.

Fig. 6 illustrates tool results discrimination. When multiple plausible tools exist for a task, ChatHuman discriminates and chooses the best result as the final response.

Fig. 7 illustrates an instruction-following data construction pipeline. The system constructs tool usage and feedback data by providing GPT-4 with various tool-related information, image content, and ground truth labels. Gray text shows some example instructions.

Fig. 8 illustrates visualization of animation processing. Left: Conversation between the user and ChatHuman. Right: ChatHuman automatically calls tools to solve the task. ChatHuman can handle tasks beyond the capabilities of individual tools.

Fig. 9 illustrates how ChatHuman discriminates and integrates tool results. The Agent will fix the unreasonable tool result and integrate the reasonable tool result to generate a final response.

Fig. 10 illustrates on the Left: the comparison to Pika1 on text to video generation, on the Right: Qualitative comparison with ChatPose [Feng et al., 2024] and HMR 2.0 [Goel et al., 2023] on reasoning-based human pose estimation task.

Fig. 11 Illustrates how human interaction can improve the performance and tool usage accuracy of ChatHuman.

Fig. 12 illustrates a tool-conditioned transformation process. The system converts the varied tool outcomes into textual or visual formats that the LLMs can more readily process.

Fig. 13 depicts examples of the instruction-following data for discriminating pose generation and pose description results.

Fig. 14 is a depiction of an instruction-following data about integrating results from human contact detection. The contact labels detected by DECO [Tripathi et al., 2023a] are combined with the user query.

Fig. 15 is a depiction of an Instruction-following data for integrating results from human body estimation. Measurements of the estimated body shape from BEDLAM-CLIFF [Black et al., 2023] are added to the user query as clues.

Fig. 16 are qualitative examples of the scientific-paper-based RAG mechanism. A single tool can have multiple application scenarios.

FIG. 17 illustrates an overview of an example system for generating a description of 3D human as depicted in given input data and an inquiry by selecting and using one or more 3D human analysis tools in accordance with aspects of the present disclosure.

FIG. 18 illustrates an overview of an example system for generating a description of 3D human in given multimodal input data in accordance with aspects of the present disclosure.

FIG. 19 illustrates an example of a method for generating tool documents based on given descriptions of 3D analysis tools by using a large language model in accordance with aspects of the present disclosure.

FIG. 20 illustrates an example of a method for generating instruction-following data as training data for finetuning a large language model in accordance with aspects of the present disclosure.

FIG. 21 illustrates an example of a method for generating training data for finetuning a large language model and for generating a 3D human description of given input query by using the finetuned large language model in accordance with aspects of the present disclosure.

FIG. 22 illustrates an example of a method for selecting a 3D human analysis tool and using the 3D human analysis tool to generate a description of a 3D human in accordance with aspects of the present disclosure.

FIG. 23 illustrates a simplified block diagram of a device with which aspects of the present disclosure may be practiced in accordance with aspects of the present disclosure.

Fig. 24 is an example of a prompt to request GPT-4 to summarize paper content, rearticulate tool functions, and enumerate possible user queries for tool activation.

Fig. 25 is an example of a prompt to request GPT-4 to generate instruction-following data about tool usage based on the image description, tool description, and tool usage examples summarized from tool paper.

Fig. 26 is an example of a prompt to request GPT-4V to generate instruction-following data about human-object interaction based on the contact description and RGB image.

Fig. 27 is an example of a prompt to request GPT-4 to generate instruction-following data about human body shape based on the textual description about human body.

Fig. 28 is an example of a prompt to request GPT-4 to construct tool graph based on the image description, tool description, and tool usage examples summarized from tool paper.

## Detailed Description

### Overall Pipeline

ChatHuman consists of a multimodal LLM $f_\phi(\cdot)$, along with a set of 3D humanrelated functions $f_{\theta 1}(\cdot), f_{\theta 2}(\cdot), \ldots$ These functions serve as tools for various tasks, such as 3D human pose estimation, pose generation, and 3D face reconstruction. Our model takes input text queries $X_q$, images $X_v$, and optionally $X_m$ representing other 3D human-related modalities (e.g., SMPL parameters for 3D human poses). Then it invokes tools and integrates their results to generate outputs as text $Y_t$, images $Y_v$, or 3D human-related modalities $Y_m$.

### Retrieval-Augmented Tool Usage

Teaching LLMs to decide when and how to use tools effectively is a significant challenge. A basic approach [Rasley et al., 2023,Yang et al., 2023a] might involve including tool usage scenarios and input arguments within the LLM prompt, represented as $Y_{tool} = f_\phi(X_q, X_t)$, where $X_t$ denotes tool definitions. However, this approach often falls short for specialized tools, especially given the variety of advanced tools for 3D human tasks. Many tools require background knowledge for correct use and have multiple application scenarios. For instance, the HMR tool [Goel et al., 2023] may be queried with requests like, "Can you estimate this person's pose?", "What are the SMPL parameters?", or "Provide the 3D mesh of this person." Capturing all possible usage scenarios succinctly in a prompt is difficult, and as tools proliferate, prompt descriptions become unwieldy. To address these challenges, the system introduces paper-based Retrieval-Augmented Generation (RAG) [Lewis et al., 2020] and build a tool graph for tool combination. As used herein, "paper-based" material refers to physical and digital academic, research and similar materials and treatises.

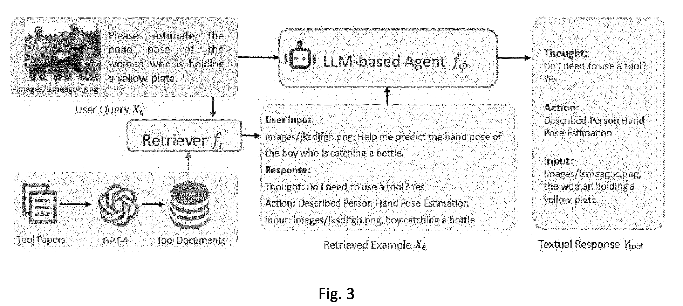

As shown in Fig. 3, the system feeds academic papers associated with each tool into GPT4, prompting it to summarize the tool's functions and generate possible user queries for tool activation. These papers, with their rich background and detailed instructions, enable the generation of user queries that cover diverse use cases. By combining these queries with each tool's structured arguments, the system compiles a document of question-answer pairs for each tool's operation. Figure 3 provides an example from one of these documents. These documents serve as an auxiliary knowledge base during inference, from which the system retrieves a relevant example $X_e$ in response to a user query $X_q$. The retrieval process matches the text embedding of the query with embeddings in the tool documents using a text embedding model [Su et al., 2022]. The retrieved sample is then presented to the agent $f_\phi$ as an in-context learning example:

$$Xe = fr(Xq), \quad Ytool = f\phi(Xq, Xe, Xt), \tag{1}$$

where $f_r$ is the retrieval function, and $Y_{tool}$ is a textual description of the tool invocation, specifying tool selection, names, and input arguments for tool calls. Graph-based Tool Invocation. Note that the tool use description $Y_{tool}$ varies depending on task settings, as shown for a single tool case in Fig. 3. However, some complex tasks require combining multiple tools. To handle this, the system introduces a graph-based mechanism for tool invocation. The system then constructs a tool graph with three structure types: nodes (single tool calls), chains (tool sequences for dependent tasks), and directed acyclic graphs (DAGs) [Shen et al., 2023] for complex multibranch operations. For each user query, the model predicts an appropriate tool graph and invokes the tools accordingly. Examples of tool graphs are shown in Fig. 4.

### Tool Result Integration

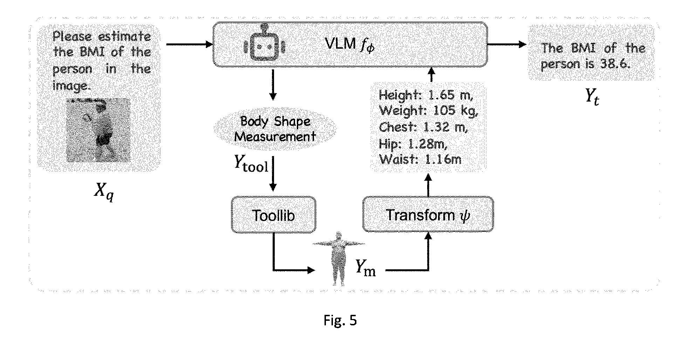

After using tools, integrating their results is required to effectively engage with users and solve problems. However, outputs from different tools vary widely, appearing as language, images, or vectors (like SMPL poses), which can challenge current multimodal LLMs, such as LLaVA [Liu et al., 2023], that process only text and images. To utilize these varied results and enhance the LLM's understanding of 3D humans, thereby improving its ability to apply world knowledge to problemsolving, the system introduces a tool-conditioned transformation, $\Psi(\cdot)$. As shown in Fig. 5, this transformation converts tool outputs $Y_m$ into textual or visual formats the LLM can process. For example, the system transforms the vertex-wise contact label from DECO [Tripathi et al., 2023a] into body part-level descriptions using SMPL's [Loper et al., 2015] vertex-to-part mapping dictionary, and render the mesh generated by PoseScipt [Delmas et al., 2022] into an RGB image using rendering techniques. See Appendix for more details. The transformed results are then merged with the user query as context for response generation:

$$Y_t = f_\phi(X_q, \Psi(Y_m)). \tag{2}$$

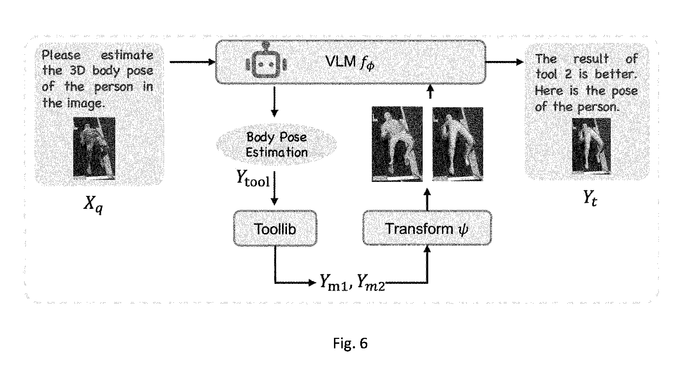

In scenarios where multiple tools can address a request (Fig. 6), the system presents outcomes as multiple-choice questions, prompting the model to select the most relevant answer:

$$Y_t = f_\phi(X_q, \Psi(Y_{m1}), \Psi(Y_{m2}), \ldots), \tag{3}$$

where $Y_{mi}$ denotes the $i$-th tool result. Since different tools have different failure modes, this process enables ChatHuman to identify the best method case by case, producing more accurate output than any individual method alone.

Training Data Construction

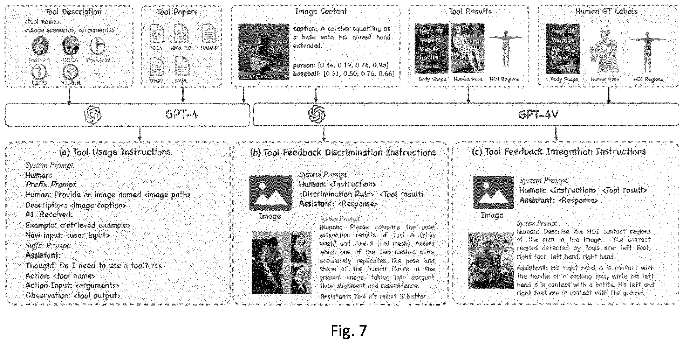

Tool Usage Instruction-following Data. To teach the LLM-based agent to correctly use tools, we construct 90K instruction-response pairs about tool usage. Following GPT4Tools [Yang et al., 2023a], the system provides GPT-4 [OpenAI, 2023] with a textual description of COCO training images [Lin et al., 2014] and a tool-related prompt containing a tool description. To improve efficiency, the system first prompts GPT-4 to summarize paper content, re-articulate tool functions, and enumerate 50 potential user queries for tool activation (see Fig. 7(a)).

Tool Feedback Instruction-following Data. To help the multimodal LLM model discriminate and integrate the tool results, the system constructs 88K pairs of instruction-following data based on existing datasets 3DPW [von Marcard et al., 2018], MOYO [Tripathi et al., 2023b], PoseScript [Delmas et al., 2022] and SHAPY [Choutas et al., 2022] (see Fig. 7(b)(c) ). Please see Appendix for more details about data construction.

Model Training

Once the system has data, the system uses, for example, Low-rank adaptation (LoRA) [Hu et al., 2021] to finetune the LLM $f_\phi(\cdot)$ with the cross entropy loss. More specifically, with the ground truth tool invocation labels $\hat{Y}_{tool}$ and response label $\hat{Y}_t$, the system optimizes the model using the following objective function: L = $\mathbf{CE}(\hat{Y}_{\text{tool}}, Y_{\text{tool}}) + \mathbf{CE}(\hat{Y}_t, Y_t)$, where **CE** denotes the cross-entropy loss. See Appendix for details.

Implementation Details

While it should be clear to someone practiced in the art that the system could use different LLMs, backbones, vision encoders, etc., the invention described herein describes one particular embodiment. Specifically, the system uses LLaVA-1.5 [Liu et al., 2023] as the VLM backbone, with CLIP [Radford et al., 2021] for vision encoding and Vicuna [Chiang et al., 2023] for the LLM backbone. For retrieval, the system adopts, for example, INSTRUCTOR [Su et al., 2022] for text embedding and utilize Chroma's vector similarity searching algorithm to identify relevant examples. To preserve the generalization of the pretrained multimodal LLM, the system uses, for example, LoRA [Hu et al., 2021] to perform efficient finetuning, with rank 128 and alpha 256. The system implements tool utilization with LangChain [Chase and Contributors, 2022], which enables automatic parsing of tool names and input parameters, followed by tool invocation Optimization uses AdamW [Loshchilov and Hutter, 2017], with a learning rate of 2e-4 and weight decay of 0. All models are finetuned over 2 epochs with a mixture of tool usage, tool feedback, and LLaVA multimodal instruction-tuning data, using 8 Nvidia A100-80G GPUs with the DeepSpeed [Rasley et al., 2020] engine. Unless otherwise specified, the system uses LLaVA-1.5-7B as the base model for the ablation study. ChatHuman supports 26 human-related tools, including 9 perception tools, 10 generation tools, and 7 reasoning tools. See, Table 1. It is contemplated that other tools can be added or substituted for those shown.

| Perception | Reasoning | Generation |
|---|---|---|
| Body Pose Estimation [Goel et al., 2023] | Selective Person Pose Detection [Goel et al., 2023,Liu et al., 2023] | Text-to-Pose Generation [Delmas et al., 2022] |
| Body Shape Measurement [Black et al., 2023] Hand Pose Estimation [Lin et al., 2021] | Specific Person Shape Measurement [Liu et al., 2023,Black et al., 2023] | Speculative Pose Generation [Liu et al., 2023,Delmas et al., 2022] Text-to-Image Generation [Rombach et al., 2022] |
| | Targeted Hand Pose Estimation [Liu et al., 2023,Lin et al., 2021] | |
| Face Reconstruction [Feng et al., 2021] Human Segmentation [Kirillov et al., 2023] | Described Person Face Reconstruction [Liu et al., 2023,Feng et al., 2021] Described Person Segmentation [Liu et al., 2023,Kirillov et al., 2023] | Text-based Pose Editing [Delmas et al., 2023] |
| | | Remove Someone From The Photo [Liu et al., 2023,Kirillov et al., 2023,Rombach et al., 2022] |
| HOI Detection [Tripathi et al., 2023a] Pose Description [Delmas et al., 2022] | Selective Person Contact Estimation [Liu et al., 2023,Tripathi et al., 2023a] Visual Question Answering [Liu et al., 2023] | Replace Someone From The Photo [Liu et al., 2023,Kirillov et al., 2023,Rombach et al., 2022] |
| | | Instruct Image Using Text [Rombach et al., 2022] |
| Image Caption [Liu et al., 2023] | | Text-to-Motion Generation [Petrovich et al., 2023] |
| Motion Capture [Shin et al., 2024] | | Text-to-Video Generation [Petrovich et al., 2023,Rombach et al., 2022,Zhu et al., 2024] Image-to-Video Generation [Petrovich et al., 2023,Zhu et al., 2024] |

Table 1

**Use Cases**

Tool Use

Tool Usage Benchmark. To evaluate tool usage accuracy, the system constructs a validation and test set. The validation set has 1000 samples with the same tools as the training set, while the test set includes 689 samples related to 3 tools unseen during training. Split of seen and unseen tools are detailed in Table 1. Similar to our training data construction, the system feeds a textual description of COCO validation set image, a tool description, and some examples summarized from the tool paper into GPT-4 and prompt it to generate instruction-following data. We use the image description captioned by LLaVA [Liu et al., 2023] instead of the original image captions to ensure differences between training and test sets. Finally, all question-answering pairs are checked for accuracy.

Evaluation on 3D Human Related Tasks

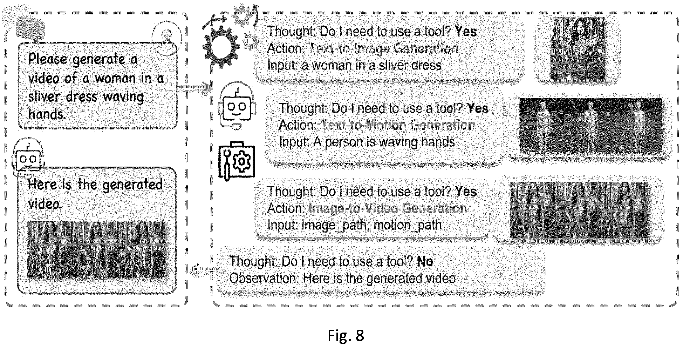

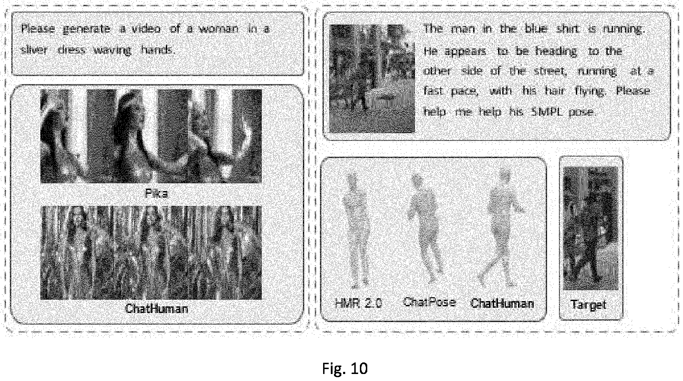

Character Animation. ChatHuman employs tools for text-to-motion and image-to-video generation. We demonstrate how these tools are utilized to interact with users and reason about motions based on conversations in Fig. 8 and Fig. 1. ChatHuman can also tackle tasks that cannot be resolved with a single tool. For instance, text-to-human video generation poses significant challenges due to the complexity of motion. Therefore, another option is to first generate a motion sequence via text-to-motion generation, then apply a video generation model conditioned on this sequence. The internal processing within ChatHuman, detailing how it analyzes and solves tasks, is visualized in Fig. 8. We compared the ChatHuman text-to-video generation results with those of Pika (https://pika.art/ accessed May 2025). The qualitative comparisons are shown in Fig. 10.

Pose Estimation. Following ChatPose [Feng et al., 2024], we evaluated the performance of our method on both classical and reasoning-based pose estimation (RPE) tasks. MPJPE, PA-MPJPE, and MPJRE on the 3DPW [von Marcard et al., 2018] and RPE [Feng et al., 2024] benchmarks are reported. For the reasoning-based pose estimation task, ChatHuman first grounds a human based on a textual description and feeds it into the pose estimation tool to get the result. For reasoning-based human pose estimation, which involves both reasoning ability and advanced human pose estimation ability, ChatHuman outperforms both task-specific and multi-modal LLM methods by a large margin (34.6% ↓ in MPVPE). As shown in Fig. 10, only the ChatHuman method achieves a satisfactory result. The comparative multimodal LLM, ChatPose, finds the correct person but fails to obtain an accurate pose due to its limited perception ability, while the task specific tool does not match the correct person due to the lack of reasoning ability. This demonstrates the advantage of ChatHuman, which combines task-specific tool use expertise with the general reasoning ability of an LLM.

Pose Generation. Here we evaluated the pose generation capability of ChatHuman on the classical text-to-pose generation task and the speculative pose generation task (SPG) [Feng et al., 2024]. Following previous work [Delmas et al., 2022,Feng et al., 2024], we report the text-to-pose recall rate $R^{T2P}$ and pose-to-text recall rate $R^{P2T}$ of the retrieval models trained on real poses and evaluated on generated poses. For the SPG task, ChatHuman first rephrases the indirect pose descriptions into explicit ones and adopts PoseScript (journal version) [Delmas et al., 2022] to generate a pose.

Body Shape Measurement. We evaluated the body shape measurement accuracy of ChatHuman. We randomly sample 100 images from the HBW validation set [Choutas et al., 2022] and compare our method with a multimodal LLM, LLaVA [Liu et al., 2023], and a SOTA body shape estimation method, CLIFFBEDLAM [Black et al., 2023]. For LLaVA and ChatHuman, we ask them the same question to inquire about the height, weight, chest, waist, and hip circumferences of a person and then prompt GPT-3.5 to extract the value from the model output. The details of the question and prompt are available in the Appendix. CLIFF-BEDLAM predicts the body shape parameters, which are then converted to measurements based on the shape-to-measurement function from SHAPY [Choutas et al., 2022].

Human-Object Interaction (HoI). We evaluated the human-object interaction understanding ability of ChatHuman on the DECO [Tripathi et al., 2023a] test set. The ground truth (GT) labels are obtained by converting the vertex-level contact labels into body part-level contact labels with SMPL's vertex-to-part mapping dictionary. Given a human image, we asked the multimodal LLM to detect the body parts contacting objects and prompt GPT-3.5 to extract the body part labels from the answer. Subsequently, we compared the predicted body parts with the GT label and compute the average detection precision, recall rate, and F1 Score. ChatHuman achieves SOTA precision and F1 score, demonstrating superior human-object interaction understanding ability. Notably, although LLaVA has a high recall rate, its precision and F1 score are rather poor, which means that it tends to predict all the body parts to be in contact with objects.

Multiple Tools Invocation. One of the advantages of using a VLM as an agent is its powerful generalization capacity. To test the robustness and generalization ability of ChatHuman, we conducted the following ablation study. During training, we only included the tool graphs with no more than three tools, while during evaluation, the user queries might need up to five tools to solve. ChatHuman exhibits an excellent robustness in this out-of-domain setting (more than three tools combination) with an action accuracy higher than 90%.

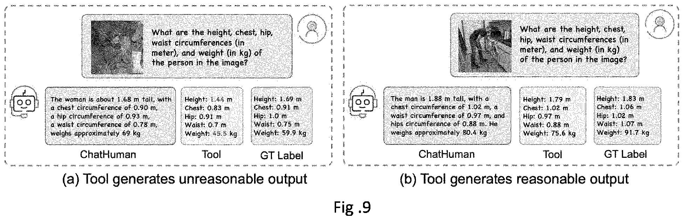

Tool Result Integration. Additionally, we studied whether ChatHuman can utilize its world knowledge to discriminate and improve the tool performance. We design two discrimination schemes, i.e., selection and modification, and conduct an ablation study on two human-related tasks by comparing ChatHuman with the SOTA task-specific tools. For the selection scheme, we experimented with the pose estimation task and select two SOTA methods, HMR 2.0 [Goel et al., 2023] and CLIFF-SMPLify [Li et al., 2022,Bogo et al., 2016], as our tools to generate two poses of each person. We then prompted the LLM-based agent to discriminate the results and choose the better one as the final response. Different tools excel in different scenarios and, to cover more diverse human poses and camera views, we built a new benchmark MixPose by selecting 100 images with extreme camera views from the MoYo [Tripathi et al., 2023b] test set, 100 full-body samples and 100 severely-truncated samples from 3DPW [von Marcard et al., 2018] test set. Details of the prompt and MixPose benchmark are in the Appendix. For the modification scheme, we validated on the body shape measurement task. We used CLIFF-BEDLAM [Black et al., 2023] as tool and prompt the agent to discriminate and modify the tool result. The result is reported in Fig. 9. The LLM-based agent enhances tool performance by using its general world knowledge to identify and correct unreasonable tool results, such as height and weight in Fig. 9 (a).

The present invention, ChatHuman, is an LLM-based model designed to learn the use of tools related to 3D humans and assist users in solving tasks associated with 3D humans. ChatHuman processes requests from users, analyzes the needs, and utilizes the necessary tools. It then evaluates the tools' outputs to respond to the user's queries.

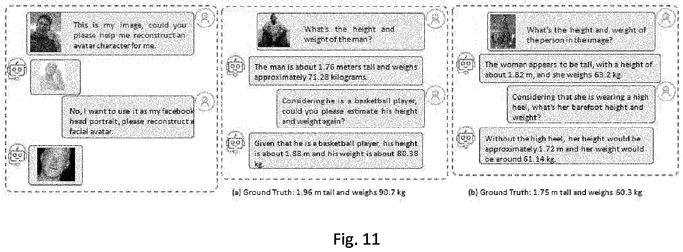

ChatHuman may initially fail in certain calling scenarios, particularly when the user request is vague, and subsequent LLM internal analysis cannot rectify an incorrect initial function call. However, further interaction with users can remedy this if they provide additional information. Fig. 11 illustrates an instance of using body estimation and face reconstruction tools for avatar creation. Even with the application and analysis of the tool, outcomes like height estimation may not be entirely precise. One contributing factor is the accuracy of the training data; for instance, most height labels in datasets use the official height of models or celebrities, which may not account for variations like shoe height, such as a 7-inch heel. Incorporating more cues from users, combined with the LLM's knowledge of the world and reasoning capabilities, can enhance result accuracy, as shown in Fig. 11. Incorporating additional academic methods will enhance model performance. Notably, adding new tools requires no additional training, allowing our method to evolve and improve as new techniques are developed.

It should be clear that ChatHuman can use: 1) Integrated Learning and Self-Improvement. This can be achieved by merging tool use learning with user feedback or Reinforcement Learning to continuously refine the model's understanding and approach to 3D human tasks. 2) User Feedback for Enhanced Training: As shown in Fig. 11, user interaction has a tangible impact on improving the outcome. Ongoing dialogue with users can provide valuable feedback for refining the system's capabilities.

Finally, while ChatHuman focuses on 3D humans, the paradigm is general and can support new interfaces that open up complex vision/graphics tools to support wider applications.

Examples of some traditional tools for analyzing 3D humans include, but are not limited to, reasoning about 3D humans by leveraging parametric models for specific parts of the human body (e.g., the body, faces, hands, and the like). These traditional tools have enabled representing the human body, face, and hands in a three-dimensional space as multi-dimensional vectors. Use of the multi-dimensional vectors further enabled facilitating subsequent applications in estimation and generation of a description of 3D humans.

Other traditional tools enabled estimating human pose and shape by relying upon optimization-based methods or regression-based methods. These the SMPL Model and pose parameters from a given input image. Similarly, face reconstruction methods estimate shape and expression parameters of the face model from single images. Some traditional tools perform detection of human-object interaction ("HOI"), which is useful for understanding human-environment interaction and social properties. Some other traditional technologies enabled synthesizing and correcting 3D human poses from text descriptions. Other examples of language-to-3D generation methods create 3D human shapes. For enabling further understanding of 3D humans, some studies focus on classifying action labels in video sequences or recognizing human emotions, enhancing our comprehension of human behavior.

As mentioned above, some types of traditional 3D human analysis tools further include perception tools, reasoning tools, and generation tools. The perception tools further include, but not limited to body pose estimation, body shape measurement, hand pose estimation, face reconstruction, human segmentation, HOI detection, pose description, and image captioning. Tools of reasoning type may include, but are not limited to, selective person pose detection, specific person shape measurement, targeted hand pose estimation, described person face reconstruction, described person segmentation, selective person contact estimation, visual question answering, and the like. Tools of generation may include, but are not limited to, text-to-pose generation, speculative pose generation, text-to-image generation, text-based pose editing, remove something from a given photo, replace something from a given photo, instruct image using text, and the like.

The present invention enables unifying tasks of pose generation, estimation, and LLM's general understanding into a model. Aspects of the present disclosure include a 3D human understanding agent, which provides description of a 3D human as depicted in given input data. The 3D human understanding agent leverages use of a multi-modal LLM and a variety of types of 3D human analysis tools. The multi-modal LLM is finetuned based on descriptions of a variety of 3D human analysis tools and general understanding of actions and behavior of a human in a three-dimensional space. The present technology provides the 3D human understanding agent that exploits a range of specialized human-related traditional models for performing tasks including 3D pose estimation, emotion recognition, reasoning about contact, and the like. In some aspects, the 3D human understanding agent performs reason-based pose estimation by combining results from respective tools of text-guide detections, cropping, and human estimation.

The present technology provides performing finetuning of a pre-trained LLM for selecting one or more 3D human analysis tools for performing 3D human analyses on given input data and generating a 3D human description based on output results from the respective 3D human analysis tools. The present case is more than merely utilizing off-the-shelf or fine-tuned LLMs as specialized applications for addressing specific issues of basic vision problem, mobile application, computer system challenges, and the like. The present case focuses on generating and providing general understanding of 3D humans as depicted in given input data. In an embodiment, the present technology provides: 1) selecting one or more 3D human analysis tools from a plurality of 3D human analysis tools for analyzing distinct aspects of humans in input data (e.g., images) and 2) using the selected 3D human analysis tools to perform 3D human analysis on the given input data. In some aspects, the respective operations of selecting and executing a 3D human analysis tool and generating a response may be automatic, without intervention of an operator. To generate output response to input query, the present case teaches combining respective output results from the respective selected 3D human analysis tools with a broader knowledge of the finetuned and pre-trained LLM to respond to the user. Given interactions with a variety of 3D human analysis tools for generating an output, the present technology incorporates discriminating output results from some 3D human analysis tools from others and integrating the output results into output response in forms including images, text, and 3D parametric meshes as encoded data.

In an embodiment, a 3D Human understanding agent provides a Retrieval-Augmented Generation ("RAG") model to select one or more tools for performing 3D human analysis on given input data. In particular, the LLM is trained and fine-tuned based on descriptions (e.g., research papers) of various 3D human analysis tools. As mentioned above, the LLM is finetuned as a "paper-based RAG model" by using the descriptions as training data to enable predicting one or more 3D human analysis tools to analyze given input data.

In aspects, the present technology provides 1) a framework that leverages LLMs to address issues of 3D human understanding with tools, 2) a scientific paper-based RAG mechanism to ensure tool usage by understanding tool descriptions from research papers and user guides, enhancing the tool application and contextual understanding, and 3) integration of tool outcomes from LLMs.

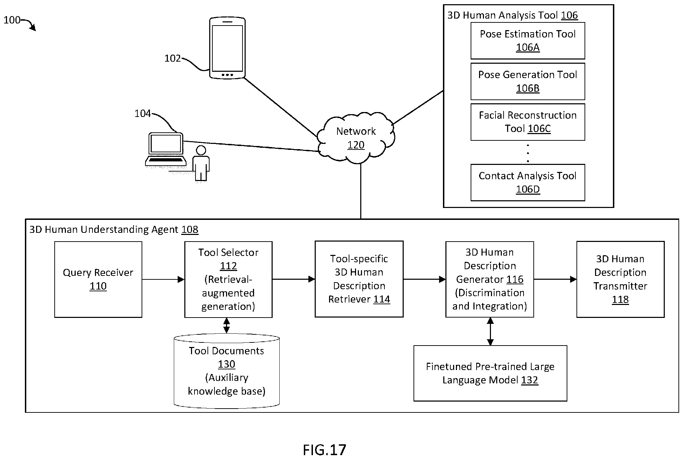

FIG. 17 illustrates an overview of an example system for generating a description of 3D human as depicted in given input data and an inquiry by selecting and using one or more 3D human analysis tools in accordance with aspects of the present disclosure. In aspects, a system 100 comprises a mobile computing device 102, a client terminal 104, 3D human analysis tool 106, 3D human understanding agent 108, interactively connected over a network 120.

The 3D human analysis tool 106 comprises a variety of tool applications for analyzing 3D human in a given input query (e.g., a textual data, image data, video data, and the like). In aspects, the 3D human analysis tool 106 comprises specific types of analysis tools including but not limited to, pose estimation tool 106A, pose generation tool 106B, facial reconstruction tool 106C, contact analysis tool 106D, and the like.

The pose estimation tool 106A estimates a 3D human pose based on given image data with caption text. In aspects, the pose estimation tool 106A comprises a transformer-based network for reconstructing a three-dimensional human pose and shape from a given image, The pose generation tool 106B generates a 3D human pose based on the given image data. The facial reconstruction tool 106C provides a face that is recognized in the given image data based on image recognition. In aspects, the facial reconstruction tool 106C comprises detailed express capture and animation ("DECA") for reconstructing a three-dimensional head-model with detailed facial geometry from the given image. The contact analysis tool 106D may comprise Dense Estimation of 3D Human-Scene Contact in the Wild ("DECO") for inferring dense vertex-level three-dimensional contacts on a human body. The 3D human analysis tool 106 may further comprise Hand Mesh Recovery ("HaMeR") for reconstructing a hand in a three-dimension with transformers).

The 3D human understanding agent 108 receives an input query and generates a description of 3D human as depicted in the input query. The 3D human understanding agent 108 comprises query receiver 110, tool selector 112, tool-specific 3D human description retriever 114, 3D human description generator 116, 3D human description transmitter 118, tool documents 130, and finetuned pre-trained large language model ("LLM") 132.

The query receiver 110 receives an input query from devices (e.g., the mobile computing device 102, the client terminal 104, and the like). In aspects, the input query comprises image and/or video data that depict a state of human. The input query may further comprise a query in textual form. The input query may inquire identifying specific aspects of 3D human in a given image and/or video data. The input query may further comprise embedded data. PoseScript, for example, is used for pairing a three-dimensional human pose with both automatically generated and human-written descriptions in a natural language.

Tool selector 112 selects one or more tools of respective tools (106A-106D) of the 3D human analysis tool 106 based on the given input query. In aspects, the tool selector 112 uses tool documents 130. The tool documents 130 may represent a predetermined auxiliary knowledge base to identify one or more 3D human analysis tools for execution based given input query. The predetermined auxiliary knowledge base may be previously generated by using a large language model based on a set of documents that respectively describe the respective tools (106A-106D) of the 3D human analysis tool 106. In aspects, the tool documents capture descriptions, functions, and data protocol formats of the respective tools (106A-106D).

The tool-specific 3D human description retriever 114 is configured to cause the selected one or more tools to perform analyzing the given input query and to generate respective outputs. The tool-specific 3D human description retriever 114 further receives respective results of the analyses from the selected one or more tools. In aspects, output from the pose estimation tool 106A may estimate a pose taken by 3D human as depicted in the input image data. Output from the pose generation tool may provide a generated pose graphics image of 3D human as depicted in the input image data. Output from the facial reconstruction tool may provide graphics data that convey a face that has been reconstructed based on the given image data. Output from the contact analysis tool 106D may indicate whether the given image data describes a 3D human in contact with an object.

Given the respective output from the respective 3D human analysis tools, the 3D human description generator 116 generates a 3D human description by using a finetuned pre-trained large language model 132. In aspects, the 3D human description generator aggregates tool-specific output from the respective tools while discriminating some results of some tools and emphasizing some other results of some other tools according to the standard knowledge of the finetuned pre-trained large language model 132.

The 3D human description transmitter 118 transmits the generated 3D human description as a response to the input query over the network 120 to the mobile computing device 102 and/or the client terminal 104.

As will be appreciated, the various methods, devices, applications, features, etc., described with respect to FIG. 17 are not intended to be limited to the specific 3D human understanding agent 108. Accordingly, additional data structures or configurations may be used to practice the methods and systems herein and/or features and applications described may be excluded without departing from the methods and systems disclosed herein.

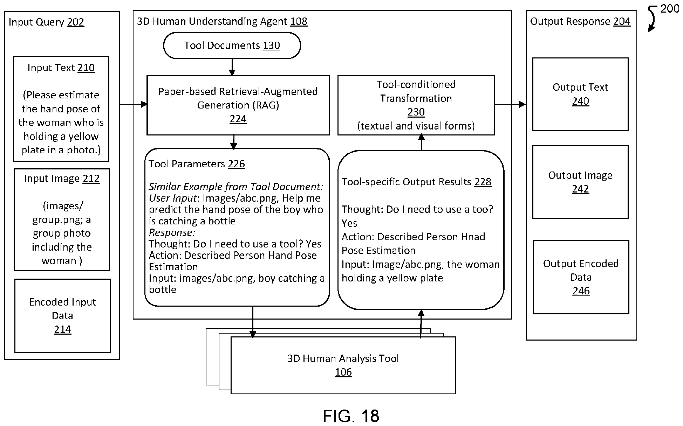

FIG. 18 illustrates an overview of an example system for generating a description of 3D human in given multimodal input data in accordance with aspects of the present disclosure. A system 200 comprises input query 202, 3D human understanding agent 108, and output response 204.

The input query 202 may represent multimodal query data. The input query 202 comprises input text 210, input image 212, and encoded input data 214. An example of the input text 210 indicates, "please estimate the hand pose of the woman who is holding a yellow plate in a photo." The input image 212 represents the photo in an image file. An example of the input image 212 is in an image file with a name, "images/group.png" with an image caption of "a group photo including the woman." The encoded input data 214 may represent a SMPL model in examples.

The 3D human understanding agent 108 may comprise tool documents 130, paper-based retrieval-augmented generation ("RAG") 224, tool parameters 226, tool-specific output results 228, and tool-conditioned transformation 230. In aspects, the paper-based RAG selects one or more tools of the 3D human analysis tool (e.g., the human analysis tool 106 as described in FIG. 17) based on tool documents 130 and generates tool parameters of respective tools that are selected. In aspects, the tool parameters 226 complies with respective data and command formats of the respective tools.

Given the generated tool parameters 226, the 3D human understanding agent 108 invokes the one or more tools of the 3D human analysis tool 106, including a pose estimation tool. The 3D human understanding agent 108 receives tool-specific output results 228 from the respective tools of the one or more selected tools of the 3D human analysis tool 106.

The 3D human understanding agent 108 performs tool-conditioned transformation 230 of the tool-specific output results 228. In aspects, the tool-conditioned transformation 230 uses the finetuned LLM to generate a description of 3D human understanding as output response 204 to the input query 202 by emphasizing and de-emphasizing (e.g., discriminating and integrating) the tool-specific output results 228 while using the standard knowledge of the finetuned LLM. In aspects, the tool-conditioned transformation 230 comprises converting the tool-specific output results 228 into textual and visual forms. The output response 204 may indicate output text 240, output image 242, and/or output encoded data 247 as part of the output response 204.

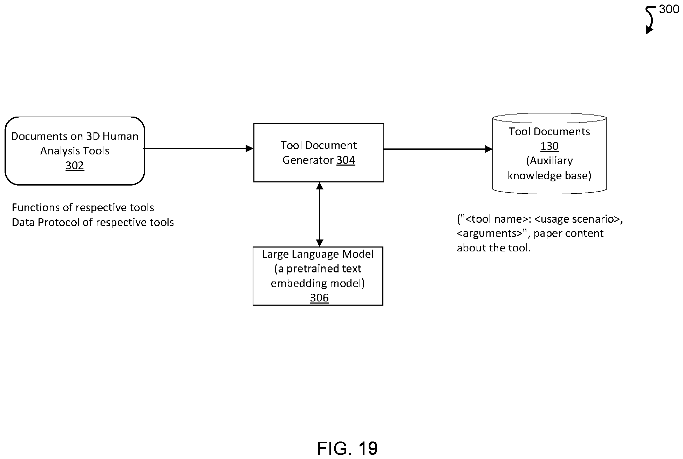

FIG. 19 illustrates an example of a system for generating tool documents based on given descriptions of 3D human analysis tools by using a large language model in accordance with aspects of the present disclosure. A tool document represents a knowledge base that captures characteristics and functional information about respective 3D human analysis tools. In some aspects, the tool document comprises question-answering pairs about operating respective 3D human analysis tools. A system 300 comprises documents on 3D human analysis tools 302, tool document generator 304, and tool documents 130 (auxiliary knowledge base).

The documents on 3D human analysis tools 302 comprise documents that describe respective 3D human analysis tools. A user guide of a 3D human analysis tool describes the 3D human analysis tool, functions, and argument data format to use the 3D human analysis tool, and sample usage of the 3D human analysis tool, for example. A publication document of the 3D human analysis tool may provide comparative analyses of the 3D human analysis tool.

The tool document generator 304 receives one or more documents on 3D human analysis tools 302 as input and uses a large language model (a pretrained text embedding model) 306 to compile the one or more publication documents and to generate tool documents 130.

In aspects, the tool documents 130 may serve as an auxiliary knowledge base during inference operations for selecting and using one or more 3D human analysis tools based on an input query. The system retrieves a relevant example of using 3D human analysis tools in response to an input query. Given the input query, the system identifies embedding data stored in the tool documents and the text embedding of the input query using a pretrained text embedding model. The retrieved embedding data as an example is then merged with the input query and provided as tool documents.

The paper-based RAG mechanism as described above enables the present disclosure to improve knowledge of the large language model about respective 3D human analysis tools by expanding examples of prompts for executing the respective 3D human analysis tools. Accordingly, the large language model with the paper-based RAG mechanism selects and uses a 3D human analysis tool with accuracy even when the large language model has not encountered the 3D human analysis tool during the finetuning operation of the large language model. In aspects, the tool documents 130 may be updated based on additional publications on 3D human analysis tools. Accordingly, the finetuned pre-trained large language model may be further finetuned by using the updated tool documents.

Table 2 illustrates comparison of tool usage accuracy among a variety of traditional methods and a 3D human analysis as performed by the 3D human understanding agent in the present case. The respective examples represent traditional methods respectively using a large language model. The table describes Successful Rate of thought ($SR_t$), action ($SR_{act}$), arguments ($SR_{args}$), execution (SR), and IoU. *Seen* tools represent respective 3D human analysis tools that have been seen by the system. The tools document comprises information about the seen tools. *Unseen* tools represent those 3D human analysis tools that the system has not used before. Accordingly, the tools document does not comprise information about the unseen tools.

Table 2

| Method | Seen Tools | | | | | Unseen Tools | | | | |
|---|---|---|---|---|---|---|---|---|---|---|
| | $SR_t$ | $SR_{act}$ | $SR_{args}$ | SR | IoU | $SR_t$ | $SR_{act}$ | $SR_{args}$ | SR | IoU |
| Example #1 | 0.609 | 0.547 | 0.525 | 0.520 | 0.566 | 0.612 | 0.546 | 0.542 | 0.525 | 0.573 |
| Example #2 | 0.825 | 0.710 | 0.687 | 0.690 | 0.741 | 0.904 | 0.807 | 0.690 | 0.747 | 0.800 |
| Example #3 | 0.498 | 0.319 | 0.237 | 0.251 | 0.791 | 0.507 | 0.314 | 0.226 | 0.293 | 0.803 |
| Example #4 | 0.892 | 0.802 | 0.715 | 0.753 | 0.797 | 0.998 | 0.913 | 0.801 | 0.872 | 0.907 |

(continued)

| Method | Seen Tools | | | | | Unseen Tools | | | | |
|---|---|---|---|---|---|---|---|---|---|---|
| | $SR_t$ | $SR_{act}$ | $SR_{args}$ | SR | IoU | $SR_t$ | $SR_{act}$ | $SR_{args}$ | SR | IoU |
| Present Case | **1.000** | **0.974** | **0.950** | **0.970** | **0.975** | **0.999** | **0.967** | **0.893** | **0.954** | **0.953** |

Examples #1 and #2 respectively represent variants of a system with a common traditional large language model. Example #2 represents a system with a variant of the common traditional large language model that was finetuned with the training data as described in the present disclosure. Examples #3 and #4 respectively represent variants of a system with another common traditional large language model.

As Table 2 indicates, the present case performs with improvements in respective successful rates over the example traditional methods.

Table 3 describes comparison of classical and speculative pose generation according to two distinct benchmarks. Benchmark #1 uses a classical text-to-pose generation task. Benchmark #2 uses the speculative pose generation task. Examples #3 and #4 respectively utilize large language models for textual pose descriptions rephrase, processed by PoseScript to generate poses. Top 5, 10, and 20 recall rates are reported.

A value of $"R^{P2T}"$ represent a text-to-pose recall rate of a retrieval model. A value of $"R^{T2P}"$ represents a pose-to-text recall rate of a retrieval model. The respective retrieval models are trained on real poses and evaluated on general poses. For performing speculative pose generation tasks (i.e., Benchmark #2), the present case first rephrases the indirect pose descriptions into explicit ones and adopts PoseScript to generate a pose.

Table 3

| Method | Benchmark #1 | | | | | | Benchmark #2 | | | | | |
|---|---|---|---|---|---|---|---|---|---|---|---|---|
| | $R^{P2T} \uparrow$ | | | $R^{T2P} \uparrow$ | | | $R^{P2T} \uparrow$ | | | $R^{T2P} \uparrow$ | | |
| Example #1 | 40.4 | 52.3 | 65.0 | 41.4 | **54.1** | 65.9 | 1.5 | 3.5 | 6.2 | 1.4 | 2.3 | 5.1 |
| Example #2 | 17.6 | 25.3 | 35.8 | 28.0 | 39.0 | 54.4 | **3.3** | **5.5** | 8.2 | **3.5** | 5.8 | **11.0** |
| Example #3 | - | - | - | - | - | - | 2.1 | 4.0 | 7.1 | 2.1 | 3.3 | 6.1 |
| Example #4 | - | - | - | - | - | - | 2.7 | 4.7 | 9.2 | 2.7 | 5.3 | 8.2 |
| Present Case | **41.8** | **52.6** | **65.1** | **42.1** | 52.3 | **66.5** | 3.2 | 5.0 | **9.9** | **3.5** | **6.5** | 10.6 |

As described in Table 3, the 3D human understanding agent of the present disclosure achieves comparable performance to the traditional methods in both benchmarks. It is also notable that Example #2, which represents a traditional LLM-based method, performs poorly on classical text-to-pose generation benchmark (i.e., Benchmark #1). Example #1, which represents a task-specific model, lags in performing the speculative pose generation tasks (i.e., Benchmark #2) because of its limited ability to perform reasoning operations.

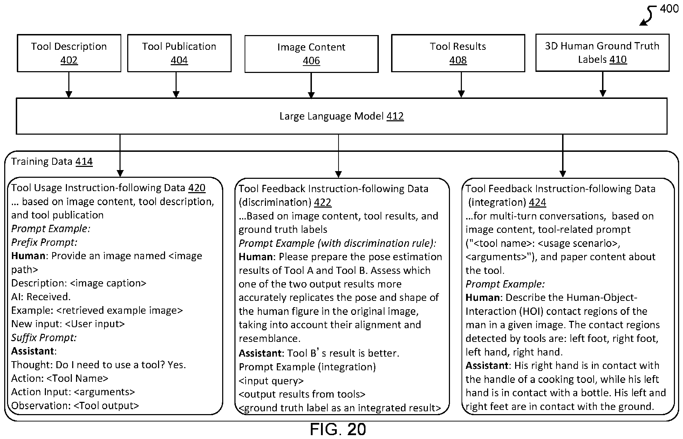

FIG. 20 illustrates an example of a system for generating instruction-following data as training data for finetuning a large language model in accordance with aspects of the present disclosure. The example system 400 comprises a large language model 412 that generates training data 414 for generating prompts to finetune a large language model. In aspects, the large language model 412 receives a variety of input data comprising tool description 402, tool publication 404, image content 406, tool results 408, and 3D human ground truth labels 410.

The tool description 402 comprises descriptions of respective 3D human analysis tools. The descriptions may be in textual form. The tool publication 404 comprises publication documents (e.g., academic research papers, user guides, and the like) about the respective 3D human analysis tools. The image content 406 comprises one or more of image data and textual descriptions of the respective image data as modalities of input queries. The textual descriptions details captions and object locations in the respective image data. The tool results 408 represents output results of 3D human analysis about the given image content 406 by the respective 3D human analysis tools. The 3D human ground truth labels 410 represents ground truth labels of 3D human analysis of the given image content 406.

The training data 414 comprises instruction-following data, which represent a series of prompts as input to a large language model. The training data 414 comprises tool usage instruction-following data 420, tool feedback instruction-following data (discrimination) 422, multi-modal instruction-following data (integration) 424 and multi-modal instruction-following data (not shown in FIG. 4). In aspects, the tool usage instruction-following data 420 at least in part relates to tool documents 130 as described in FIGs. 17 and 18 by both being based on a same set of 3D human analysis tools.

The large language model 412 receives a combination of a tool-related prompt, the tool publication, and the image content 406 as input and generates the tool usage instruction-following data 420 as training data 414. The tool-related prompt includes a system message and the tool description 402. In some aspects, the description of respective 3D human analysis tools is delineated as "<tool name>: <usage scenario>, <arguments>." The tool usage instruction-following data 420 comprises a question-answering data pair that include an input query and an output response. An answer data specifies whether to use a particular 3D human analysis tool, a name of the tool, and input arguments to execute the tool.

The tool feedback instruction-following data 422 is used to finetune a large language model to generate a 3D human description of a given input query by discriminating and integrating respective output results from 3D human analysis tools according to discrimination rules. The large language model 412 generates the tool feedback instruction-following data 422 based on the image content 406 and transformed textual and/or visual content of the tool results 408 and the corresponding 3D human ground truth labels 410. The large language model 412 curates the following two types of data from the output results from the respective 3D human analysis tools: 1) identifying the most suitable response to an input query by discriminating some results from other results, and 2) integrating output results from the respective 3D human analysis tools by featuring an input query, the output results as a hint, and a response by the 3D human understanding agent.

The multi-modal instruction-following data (not shown in FIG. 20) enables preserving inherent capability of a multimodal large language model for multi-turn conversations. The large language model generates the multi-modal instruction-following data 424 based on the image content 406, the tool-related prompt as described above, and the tool publication 404.

In aspects, the system 400 consolidates the tool usage instruction-following data 420, the tool feedback instruction-following data (discrimination) 422, the tool feedback instruction-following data (integration) 424, and the multi-modal instruction-following data (not shown in FIG. 4) into a unified format.

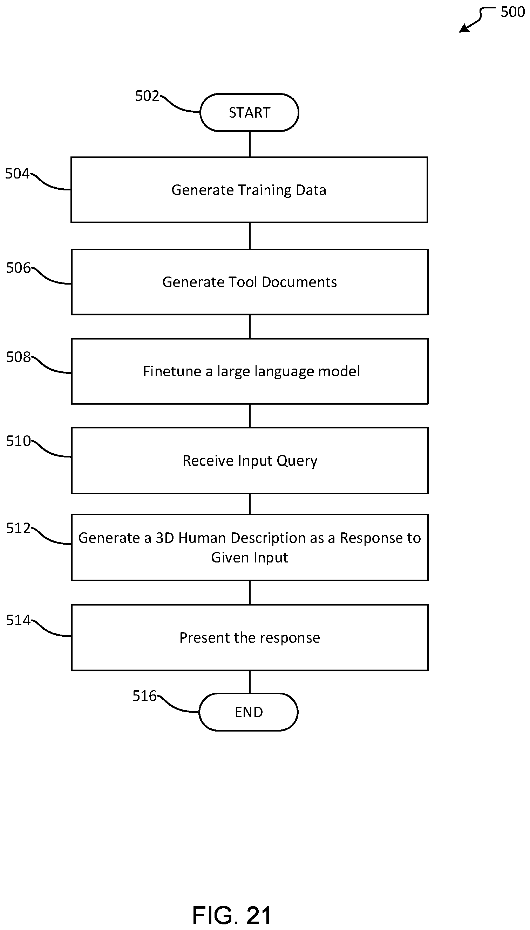

FIG. 21 illustrates an example of a method for generating training data for finetuning a large language model and for generating a 3D human description of given input query by using the finetuned large language model in accordance with aspects of the present disclosure. Generally, the method 500 begins with start operation 502 and ends with end operation 516. The method 500 may include more or fewer steps or may arrange the order of the steps differently than those shown in FIG. 21. The method 500 can be executed as a set of computer-executable instructions executed by a cloud system and encoded or stored on a computer readable medium. Further, the method 500 can be performed by gates or circuits associated with a processor, an ASIC, an FPGA, a Silicon-On-Chip ("SOC") or other hardware device. Hereinafter, the method 500 shall be explained with reference to the systems, components, devices, modules, software, data structures, data characteristic representations, signaling diagrams, methods, etc., described in conjunction with FIGs. 17-20 and 22-23.

Following the start operation 502, the method 500 begins with generate training data operation 504. In aspects, the training data as being generated may be similar to the training data 414 as described in FIG. 20. In particular, the training data may be based on instruction-following data comprising the tool usage instruction-following data 420, the tool feedback instruction-following data 422, and the multi-modal instruction-following data 424. The instruction-following data include question-answer pairs in textual form for use as a part of a prompt to a large language model.

Generate tool documents operation 506 generates tool documents based on documents about respective 3D human analysis tools. The tool documents describe respective 3D human analysis tools in question-answer pairs in textual form. In aspects, the generate tool documents operation 506 generates tool documents based on publication documents about respective 3D human analysis tools.

Finetune operation 508 performs finetuning of the large language model for tasks that involve selecting and using respective 3D human analysis tools in response to a given input query and incorporating respective output results to generate a response to the given input query.

Receive operation 510 receives input query as multimodal data. In aspects, the input query comprises text data that queries aspects of 3D human understanding, image data that depict 3D human, and encoded data that describe position information in encoded form.

Generate a 3D human description operation 512 generates a 3D human description about the input query as a response. In aspects, the generate 3D human description operation 512 further comprises selecting and invoking one or more 3D human analysis tools to obtain output results from the respective 3D human analysis tools. Given the output results, the generate a 3D human description operation 512 further comprises discriminating and integrating the output results by using the finetuned large language model to generate the response to the input query.

Present operation 514 presents the response. In aspects, the present operation 514 comprises displaying the response to a user. In some aspects, the present operation 514 comprises transmitting the response over a network for presentation in a client device. In some other aspects, the present operation 514 presents the response in a modality other than a display but as audio data and/or actuating operations of notification. End operation 516 ends the method 500.

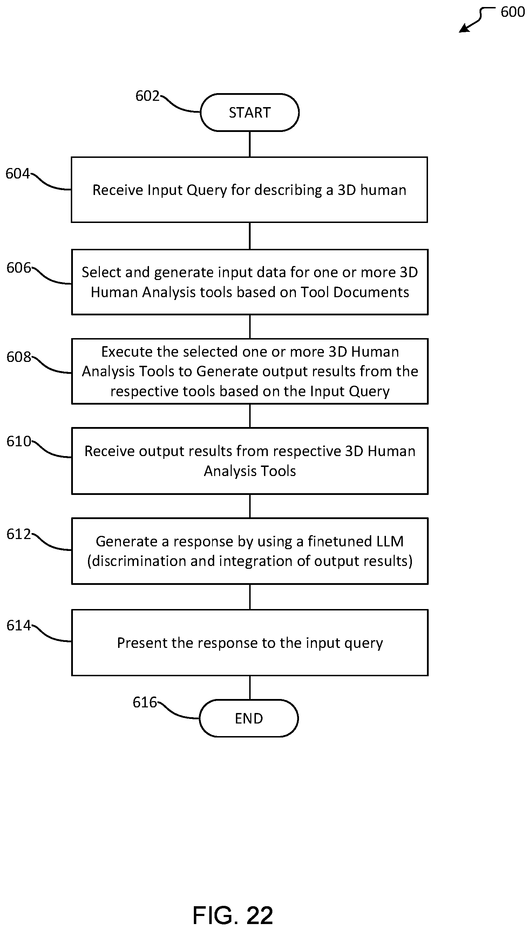

FIG. 22 illustrates an example of a method for selecting a 3D human analysis tool and using the 3D human analysis tool to generate a description of a 3D human in accordance with aspects of the present disclosure. Generally, the method 600 begins with start operation 602 and ends with end operation 616. The method 600 may include more or fewer steps or may arrange the order of the steps differently than those shown in FIG. 22. The method 600 can be executed as a set of computer-executable instructions executed by a cloud system and encoded or stored on a computer readable medium. Further, the method 600 can be performed by gates or circuits associated with a processor, an ASIC, an FPGA, a SOC, or other hardware device. Hereinafter, the method 600 shall be explained with reference to the systems, components, devices, modules, software, data structures, data characteristic representations, signaling diagrams, methods, etc., described in conjunction with FIGs. 17-21 and 23.

Following the start operation 602, the method 600 begins with receive input query operation 604. At the receive input query operation 604, input query is received. In aspects, the input query represents multimodal data, which comprises text data, image data, and encoded description of position information about 3D human in the image data.

At select and generate input data operation 606, one or more 3D human analysis tools may be selected based on predetermined tool documents according to the input query. The select and generate input data operation 606 further comprises generating input data for executing the selected one or more 3D human analysis tools according to data format as described in the tool documents. In aspects, 3D human analysis tools include, but are not limited to, 3D pose estimation, emotion recognition, reasoning about 3D human in contact with an object, 3D human movement estimation, human speech recognition, and the like.

At execute operation 608, the selected one or more 3D human analysis tools is executed. Accordingly, the respective 3D human analysis tools generate respective output results.

At receive output results operation 610, the respective output results from the selected one or more 3D human analysis tools are received. In aspects, the received output results describe 3D human understanding from a variety of aspects according to types of the selected one or more 3D human analysis tools. In some aspects, the output results are in distinct forms (e.g., description languages, images, vectors of SMPL poses, and the like).

At generate operation 612, a response to the input query is generated. In particular, the generate operation 612 uses the finetuned large language model to discriminate some of the output results from some 3D human analysis tools than others and to integrate the output results. In aspects, the generate operation 612 performs a tool-conditioned transformation that converts the output results from the respective 3D human analysis tools into textual and/or visual content formats. The tool-conditioned transformation may include transforming vertex-wise contact label about a 3D human in contact with an object and a body part-level description based on a vertex-to-part mapping dictionary of SMPL, for example. The generate operation 612 may further include combining the response with the input query, thereby enabling generation of the response with the posed input query with accuracy.

At present operation 614, the response to the input query is presented. In aspects, similar to the present operation 514 as described in FIG. 22, the present operation 614 comprises displaying the response to a user using a graphical user interface. In some aspects, the present operation 614 comprises transmitting the response over a network for presentation in a client device. In some other aspects, the present operation 614 presents the response in a modality other than a display but as audio data and/or actuating operations of notification. End operation 616 ends the method 600.

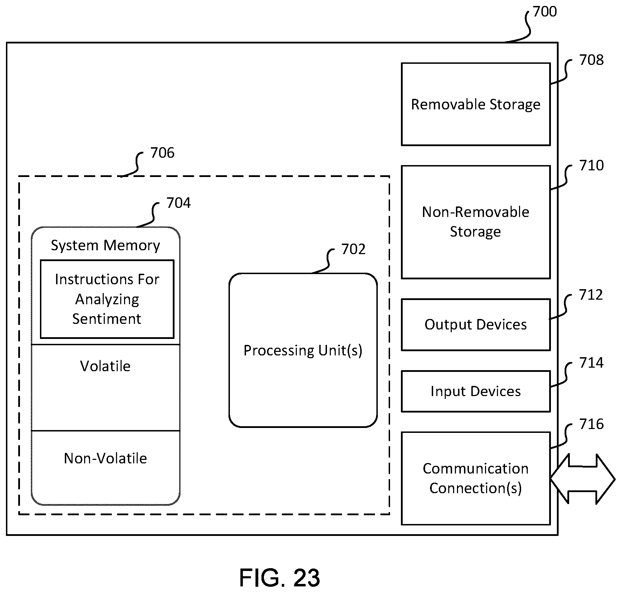

FIG. 23 illustrates a simplified block diagram of a device with which aspects of the present disclosure may be practiced in accordance with aspects of the present disclosure. The device may be a mobile computing device, for example. One or more of the present embodiments may be implemented in an operating environment 700. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 700 typically includes at least one processing unit 702 and memory 704. Depending on the exact configuration and type of computing device, memory 704 (instructions to perform a cellular-communication-assisted PPV as described herein) may be volatile (such as RAM), non-volatile (such as ROM, flash memory, etc.), or some combination of the two. This most basic configuration is illustrated in FIG. 23 by dashed line 706. Further, the operating environment 700 may also include storage devices (removable, 708, and/or non-removable, 710) including, but not limited to, magnetic or optical disks or tape. Similarly, the operating environment 700 may also have input device(s) 714 such as remote controller, keyboard, mouse, pen, voice input, on-board sensors, etc. and/or output device(s) 712 such as a display, speakers, printer, motors, etc. Also included in the environment may be one or more communication connections 716, such as LAN, WAN, a near-field communications network, a cellular broadband network, point to point, etc.

Operating environment 700 typically includes at least some form of computer readable media. Computer readable media can be any available media that can be accessed by processing unit 702 or other devices comprising the operating environment. By way of example, and not limitation, computer readable media may comprise computer storage media and communication media. Computer storage media includes volatile and nonvolatile, removable, and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 700 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets, and the Internet.

The description and illustration of one or more aspects provided in this application are not intended to limit or restrict the scope of the disclosure as claimed in any way. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

Any of the one or more above aspects in combination with any other of the one or more aspect. Any of the one or more aspects as described herein.

Appendix

**Additional Method Details**

Tool Results Integration

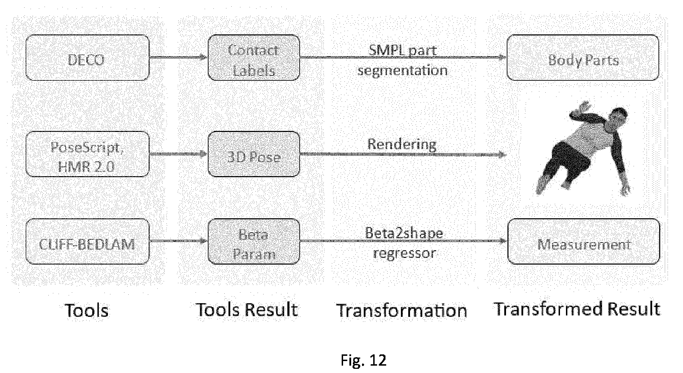

To utilize the tool results and improve the LLMs' understanding of 3D humans, which, in turn, enhances the LLMs' ability to apply its world knowledge to problem-solving - the system introduces a tool-conditioned transformation $\Psi(\cdot)$. As shown in Fig. 12, this transformation converts the varied tool outcomes $Y_m$ into textual or visual formats that the LLM can process more easily. For example, the system transforms the vertex-wise contact label predicted by DECO [Tripathi et al., 2023a] into a body part-level description based on the vertex-to-part mapping dictionary of SMPL [Loper et al., 2015], and the system renders the mesh generated by PoseScipt [Delmas et al., 2022] into an RGB image using rendering techniques.

Model Training

ChatHuman comprises a multimodal LLM $f_\phi(\cdot)$, along with a set of 3D human-related functions. During training, the tool functions are kept fixed, and only the LLM $f_\phi(\cdot)$ is finetuned using instruction-following data. Specifically, the system employs LoRA [Hu et al., 2021] with a rank of 128 and an alpha value of 256 to finetune the LLM. The trainable parameters in this setup are represented as $\phi_{lora}$. Given a user query $X_q$, the model generates a textual description of the tool invocation $Y_{tool}$ and a final textual response $Y_t$ after integrating the tool results. With the ground truth tool invocation labels $\hat{Y}_{tool}$ and response label $\hat{Y}_t$, the system optimizes the model using the following objective function: L = $\mathbf{CE}(\hat{Y}_{tool}, Y_{tool})+\mathbf{CE}(\hat{Y}_t, Y_t)$, where $\mathbf{CE}$ denotes the cross-entropy loss.

Training Data Construction

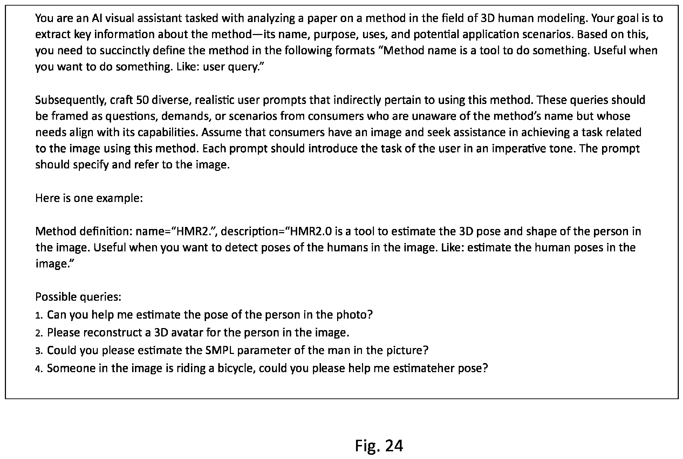

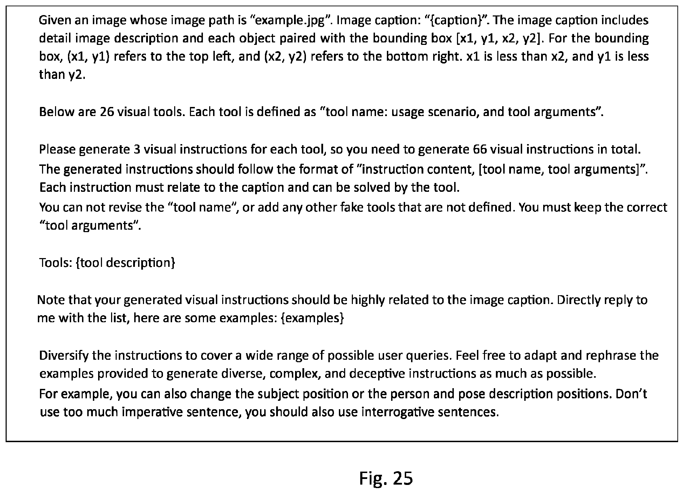

Tool Usage Instruction-following Data. To teach the LLM-based agent to correctly use tools, we constructed 90K instruction-response pairs about tool usage. Following GPT4Tools [Yang et al., 2023a], we provided GPT-4 [OpenAI, 2023] with a textual description of an image from the COCO training set [Lin et al., 2014] and a tool-related prompt containing a tool description. One of our key observations is that human-related tools often come with an academic (e.g.,

research) paper containing rich background knowledge and varied applications, which are useful for the generation of user queries covering a wide range of application scenarios. Thus, the system also incorporates the paper content into GPT-4 to generate the tool usage instruction-following data. To improve efficiency, we first prompt GPT-4 to summarize the paper content, re-articulate the tool functions and enumerate 50 potential user queries for tool activation (see Fig. 7(a)). The details of the prompt are represented in Fig. 24. The summarized tool description and user queries are fed to GPT-4 along with the image description to generate the instruction-following data about tool usage. Fig. 25 illustrates the prompt for the second step.

Tool Feedback Instruction-following Data. To help the multimodal LLM model discriminate and integrate the tool results, we constructed 88K pairs of instruction-following data based on existing 3D human datasets.

Pose Estimation Results Discrimination. To teach the LLM-based model to discriminate the pose estimation results from different tools, we built 17K pairs of instruction-following data based on the 3DPW [von Marcard et al., 2018] and MOYO [Tripathi et al., 2023b] training sets. Specifically, the system uses HMR2.0 [Goel et al., 2023] and CLIFF-SMPLify [Li et al., 2022,Bogo et al., 2016] to predict the human mesh and calculate the reconstruction error between the predicted mesh and ground truth mesh. Based on MPVPE, the system determines which tool is better for each image and construct instructionfollowing data as shown in Fig. 7(b). Pose visualization results are rendered with Pyrender [Matl, 2019].

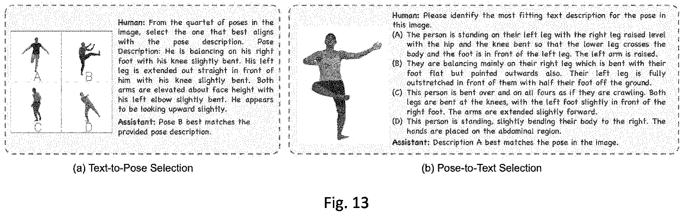

Pose Generation Results Discrimination. The human pose generation tool, PoseScript [Delmas et al., 2022], has multiple outcomes for each text input. Here we constructed 44K pairs of instruction-following data to teach the multimodal LLM-based model to discriminate the multiple pose generation results. Specifically, we used PoseScript training data as the source and construct the data in two formats. The first one is about text-to-pose selection, as shown in Fig. 13(a). Given a textual description, we visualize the corresponding pose and three other different poses from the training data and ask the agent to discriminate and choose the one that best aligns with the textual description. The second one is about pose-to-text matching, as shown in Fig. 13(b). Given a 3D pose, we visualize it as an image by rendering the 3D body mesh in that pose. Then, we combine it with the corresponding text description and three other pose descriptions in the format of a multiple choice question. Finally, we ask the agent to choose the one that best describes the pose shown in the image.

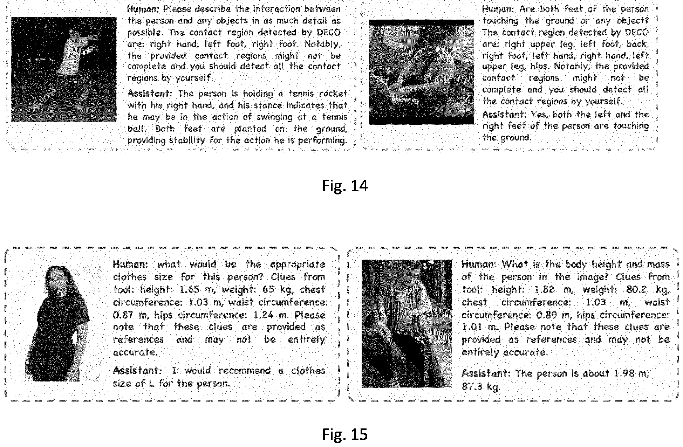

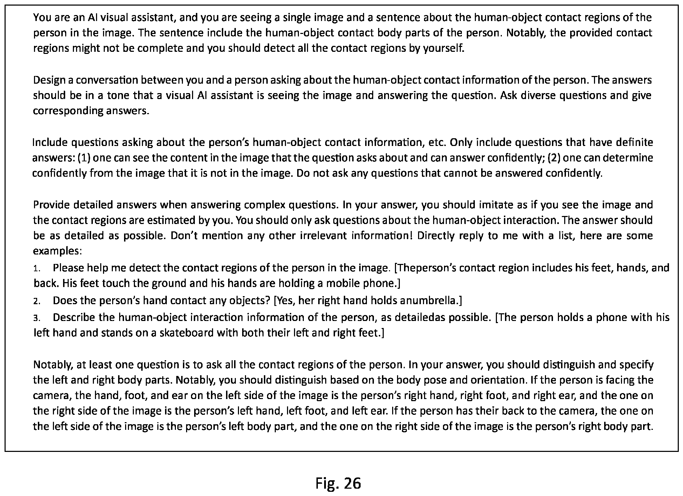

Human Contact Detection Results Integration. The outcome of the human contact prediction tool, DECO [Tripathi et al., 2023a], is a vertex-wise contact prediction in a vector representation $y_c \in \mathrm{R}^{6890 \times 1}$, which can not be directly used as input for our multimodal LLM baseline, LLaVA. To solve this problem, we transform the vertex-wise contact label of ground-truth and DECO's result into a textual description based on the vertex-to-part mapping dictionary of the SMPL model [Loper et al., 2015]. Subsequently, we feed the textual descriptions along with the RGB image from the DECO training set [Tripathi et al., 2023a] into GPT-4V and prompt GPT4 [OpenAI, 2023] to generate instruction-following data about human-object interaction as shown in Fig. 14. Notably, the transformed tool result is merged with the user query as a clue. The details of the prompt are shown in Fig. 26.

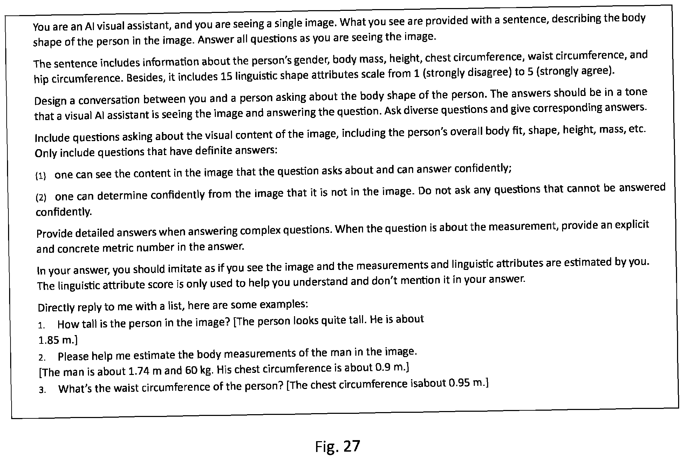

Body Shape Measurement Integration. Similar to human contact prediction, the outcome of the body shape measurement tool is the SMPL body shape parameter $\beta \in \mathrm{R}^{10}$, which is also in a vector representation and can not be used by the LLM directly. Thus, we first convert the shape parameter into measurements based on the shape-to-measurement module from SHAPY [Choutas et al., 2022] and represent it in a textual format. Subsequently, we feed the body measurement description along with attribute labels from the SHAPY training set into GPT-4 and prompt it to generate instruction-following data about human body shape as shown in Fig. 15. Similarly, we merge the body measurement predicted by the tool with the user query as a clue. The prompt for GPT-4 is detailed in Fig. 27.

Tool Graph Construction.

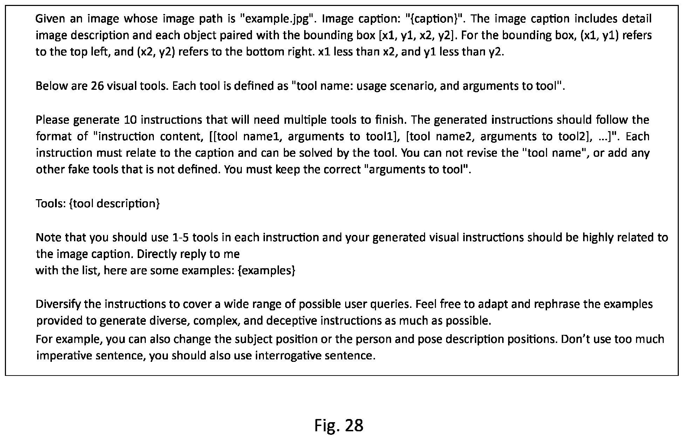

We prompt GPT-4 to construct a tool graph with three structure types: nodes (single tool calls for simple tasks), chains (tool sequences for dependent tasks), and directed acyclic graphs (DAGs) [Shen et al., 2023] for complex multi-branch operations. Fig. 28 shows the detail of the prompt.

**Additional Results**

RAG Qualitative Results.

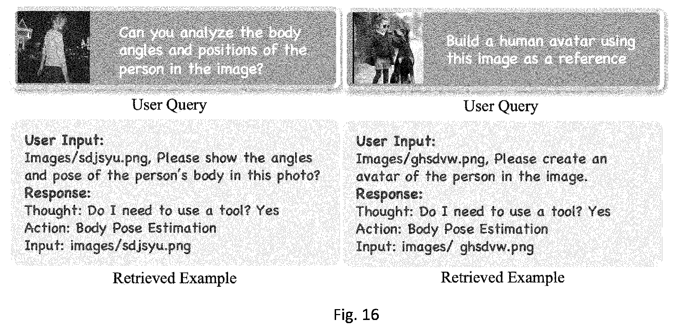

As mentioned in specification, many tools require background knowledge and have various application scenarios, which can be derived from the scientific paper. Fig. 16 shows some retrieved examples for the "Body Pose Estimation" tool from our RAG Mechanism.

The following list of citations are referred to in the specification and incorporated herein by reference in their entirety.

References

[Black et al., 2023] Black, M. J., Patel, P., Tesch, J., and Yang, J. (2023). Bedlam: A synthetic dataset of bodies exhibiting detailed lifelike animated motion. In Proceedings of the IEEE/CVF Conference on Computer Vision and Pattern Recognition, pages 8726-8737.

[Bogo et al., 2016] Bogo, F., Kanazawa, A., Lassner, C., Gehler, P., Romero, J., and Black, M. J. (2016). Keep it SMPL: Automatic estimation of 3D human pose and shape from a single image. In ECCV.

[Chase and Contributors, 2022] Chase, H. and Contributors, L. (2022). Langchain.

[Chiang et al., 2023] Chiang, W.-L., Li, Z., Lin, Z., Sheng, Y., Wu, Z., Zhang, H., Zheng, L., Zhuang, S., Zhuang, Y., Gonzalez, J. E., Stoica, I., and Xing, E. P. (2023). Vicuna: An open-source chatbot impressing gpt-4 with 90%* chatgpt quality.

[Choutas et al., 2022] Choutas, V., Müller, L., Huang, C.-H. P., Tang, S., Tzionas, D., and Black, M. J. (2022). Accurate 3d body shape regression using metric and semantic attributes. In Proceedings of the IEEE/CVF Conference on Computer Vision and Pattern Recognition, pages 2718-2728.

[Delmas et al., 2022] Delmas, G., Weinzaepfel, P., Lucas, T., Moreno-Noguer, F., and Rogez, G. (2022). Posescript: 3d human poses from natural language. In ECCV.

[Delmas et al., 2023] Delmas, G., Weinzaepfel, P., Moreno-Noguer, F., and Rogez, G. (2023). Posefix: Correcting 3d human poses with natural language. In Proceedings of the IEEE/CVF International Conference on Computer Vision, pages 15018-15028.

[Feng et al., 2021] Feng, Y., Feng, H., Black, M. J., and Bolkart, T. (2021). Learning an animatable detailed 3d face model from in-the-wild images. ACM Transactions on Graphics, 40(4):1-13.

[Feng et al., 2024] Feng, Y., Lin, J., Dwivedi, S. K., Sun, Y., Patel, P., and Black, M. J. (2024). ChatPose: Chatting about 3d human pose. In CVPR.

[Goel et al., 2023] Goel, S., Pavlakos, G., Rajasegaran, J., Kanazawa, A., and Malik, J. (2023). Humans in 4D: Reconstructing and tracking humans with transformers. In ICCV.

[Hu et al., 2021] Hu, E. J., Shen, Y., Wallis, P., Allen-Zhu, Z., Li, Y., Wang, S., Wang, L., and Chen, W. (2021). Lora: Low-rank adaptation of large language models. arXiv:2106.09685.

[Kirillov et al., 2023] Kirillov, A., Mintun, E., Ravi, N., Mao, H., Rolland, C., Gustafson, L., Xiao, T., Whitehead, S., Berg, A. C., Lo, W.-Y., et al. (2023). Segment anything. In Proceedings of the IEEE/CVF International Conference on Computer Vision, pages 4015-4026.

[Lewis et al., 2020] Lewis, P., Perez, E., Piktus, A., Petroni, F., Karpukhin, V., Goyal, N., Küttler, H., Lewis, M., Yih, W.-t., Rocktäschel, T., et al. (2020). Retrievalaugmented generation for knowledge-intensive nlp tasks. Advances in neural information processing systems, 33:9459-9474.

[Li et al., 2022] Li, Z., Liu, J., Zhang, Z., Xu, S., and Yan, Y. (2022). CLIFF: Carrying location information in full frames into human pose and shape estimation. In ECCV.

[Lin et al., 2021] Lin, K., Wang, L., and Liu, Z. (2021). End-to-end human pose and mesh reconstruction with transformers. In Proceedings of the IEEE/CVF conference on computer vision and pattern recognition, pages 1954-1963.

[Lin et al., 2014] Lin, T.-Y., Maire, M., Belongie, S. J., Hays, J., Perona, P., Ramanan, D., Dollár, P., and Zitnick, C. L. (2014). Microsoft coco: Common objects in context. In ECCV.

[Liu et al., 2023] Liu, H., Li, C., Wu, Q., and Lee, Y. J. (2023). Visual instruction tuning. In NeurIPS.

[Loper et al., 2015] Loper, M., Mahmood, N., Romero, J., Pons-Moll, G., and Black, M. J. (2015). SMPL: A skinned multi-person linear model. In ACM TOG.

[Loshchilov and Hutter, 2017] Loshchilov, I. and Hutter, F. (2017). Decoupled weight decay regularization. arXiv preprint arXiv:1711.05101.

[Matl, 2019] Matl, M. (2019). Pyrender. https://github.com/mmatl/pyrender.

[OpenAI, 2023] OpenAI (2023). GPT-4 technical report.

[Petrovich et al., 2023] Petrovich, M., Black, M. J., and Varol, G. (2023). TMR: Textto-motion retrieval using contrastive 3D human motion synthesis. In International Conference on Computer Vision (ICCV).

[Radford et al., 2021] Radford, A., Kim, J. W., Hallacy, C., Ramesh, A., Goh, G., Agarwal, S., Sastry, G., Askell, A., Mishkin, P., Clark, J., et al. (2021). Learning transferable visual models from natural language supervision. In International conference on machine learning, pages 8748-8763. PMLR.

[Rasley et al., 2020] Rasley, J., Rajbhandari, S., Ruwase, O., and He, Y. (2020). Deepspeed: System optimizations enable training deep learning models with over 100 billion parameters. arXiv preprint arXiv:2002.11681.

[Rasley et al., 2023] Rasley, J., Rajbhandari, S., Ruwase, O., and He, Y. (2023). Visual chatgpt: Talking, drawing and editing with visual foundation models. arXiv preprint arXiv:2303.04671.

[Rombach et al., 2022] Rombach, R., Blattmann, A., Lorenz, D., Esser, P., and Ommer, B. (2022). High-resolution image synthesis with latent diffusion models. In Proceedings of the IEEE/CVF conference on computer vision and pattern recognition, pages 10684- 10695.

[Shen et al., 2023] Shen, Y., Song, K., Tan, X., Zhang, W., Ren, K., Yuan, S., Lu, W., Li, D., and Zhuang, Y. (2023). Taskbench: Benchmarking large language models for task automation. arXiv preprint arXiv:2311.18760.

[Shin et al., 2024] Shin, S., Kim, J., Halilaj, E., and Black, M. J. (2024). Wham: Reconstructing world-grounded humans with accurate 3d motion. In CVPR.

[Su et al., 2022] Su, H., Shi, W., Kasai, J., Wang, Y., Hu, Y., Ostendorf, M., Yih, W.-t., Smith, N. A., Zettlemoyer, L., and Yu, T. (2022). One embedder, any task: Instruction-finetuned text embeddings. arXiv preprint arXiv:2212.09741.

[Sweller et al., 2011] Sweller, J., Ayres, P., and Kalyuga, S. (2011). Cognitive Load Theory. Springer, New York, NY.

[Tripathi et al., 2023a] Tripathi, S., Chatterjee, A., Passy, J.-C., Yi, H., Tzionas, D., and Black, M. J. (2023a). Deco: Dense estimation of 3d human-scene contact in the wild. In Proceedings of the IEEE/CVF International Conference on Computer Vision, pages 8001-8013.

[Tripathi et al., 2023b] Tripathi, S., Müller, L., Huang, C.-H. P., Taheri, O., Black, M. J., and Tzionas, D. (2023b). 3d human pose estimation via intuitive physics. In Proceedings of the IEEE/CVF Conference on Computer Vision and Pattern Recognition, pages 4713-4725.

[von Marcard et al., 2018] von Marcard, T., Henschel, R., Black, M. J., Rosenhahn, B., and Pons-Moll, G. (2018). Recovering accurate 3D human pose in the wild using IMUs and a moving camera. In ECCV.

[Yang et al., 2023a] Yang, R., Song, L., Li, Y., Zhao, S., Ge, Y., Li, X., and Shan, Y. (2023a). GPT4Tools: Teaching llm to use tools via self-instruction. arXiv preprint arXiv:2305.18752.

[Yang et al., 2023b] Yang, Z., Liu, J., Han, Y., Chen, X., Huang, Z., Fu, B., and Yu, G. (2023b). Appagent: Multimodal agents as smartphone users. arXiv preprint arXiv:2312.13771.

[Ye et al., 2023] Ye, S., Lauer, J., Zhou, M., Mathis, A., and Mathis, M. (2023). Amadeusgpt: a natural language interface for interactive animal behavioral analysis. Advances in neural information processing systems, 36:6297-6329.

[Zhu et al., 2024] Zhu, S., Chen, J. L., Dai, Z., Xu, Y., Cao, X., Yao, Y., Zhu, H., and Zhu, S. (2024). Champ: Controllable and consistent human image animation with 3d parametric guidance.

**Claims**

1. A computer-implemented system for three-dimensional (3D) human understanding, comprising:

   a multimodal large language model (LLM) programmed to process user inputs, the user inputs comprising text, images, and/or 3D human-related data;
   a retrieval-augmented generation (RAG) module programmed to access research publications and tool documentation to guide the LLM selecting and utilizing a 3D human-related tool; and
   a tool generating module programmed to transform outputs from the selected 3D human-related tool into one or more formats compatible with the LLM, enabling the LLM to generate a response that integrates tool outputs with a general knowledge of the LLM.

2. The computer-implemented system according to claim 1, wherein the RAG module is further programmed to retrieve one or more sections of research publications to inform the selected 3D human-related tool, the one or more sections including an abstract, an instruction, a method, and an experiment.

3. The computer-implemented system according to either claims 1 or 2, wherein the tool integration module is further programmed to present output from a plurality of tools as candidate tools for selecting a result, enabling the LLM to predict and select the result based on results from the candidate tools.

4. The computer-implemented system according to any of the preceding claims, wherein the computer-implemented system supports multi-turn dialogues, enabling context-aware tool selection and utilization across multiple user interactions.

5. The computer-implemented system according to any of the preceding claims, wherein the 3D human understanding describes a state of a human in three-dimensional space.

6. A computer-implemented method for training a language-driven 3D human understanding model, comprising:

obtaining documentation and research publications describing one or more tools for performing 3D human analysis;

automatically extracting tool usage instructions, input/output formats, and capability descriptions of respective tools from the documentation and the research publications;

generating a plurality of synthetic instruction-response training examples by prompting a base language model to simulate usage of the one or more tools based on the automatically extracted tool usage instructions; and

finetuning the base language model using the generated training examples to generate a tool-augmented multimodal model, the tool-augmented multimodal model selects, invokes, and reasons over outputs of the one or more tools in response to receiving user queries.

7. The computer-implemented method according to claim 6, wherein the generating the plurality of synthetic instruction-response training examples further comprises employing a self-instruct strategy that uses a language model to generate both user queries and corresponding ideal responses involving one or more tools.

8. The computer-implemented method according to either claim 6 or 7, wherein the finetuning further comprises providing the tool-augmented multimodal model with in-context learning examples that are dynamically retrieved from research document that are relevant to the one or more tools being integrated.

9. The computer-implemented method according to any of claims 6-8, wherein the automatically extracting tool usage instructions further comprises parsing structured document formats, including Application Programming Interface (API) specifications, JavaScript Object Notation) schema, or Python docstrings.

10. The computer-implemented method according to any of claims 6-9, wherein the tool-augmented multimodal model, after being trained and finetuned, is programmed to generalized to a previously unseen tool by reasoning over newly retrieved documentation at inference time without performing additional parameter updates.

11. The computer-implemented method according to any of claims 6-10, further comprising:
training the language-driven 3D human understanding model by using examples with multimodal inputs, wherein the multimodal inputs comprises at least one of natural language, 2S images, or 3D mesh representation.

12. The computer-implemented method according to any of claims 6-11, wherein the training comprises examples of transforming raw tool outputs and natural language responses into one or more formats, enabling the model to abstract and summarize output the formats for end users.

13. A device for three-dimensional (3D) human understanding, comprising:

a processor configured to execute operations comprising:
processing, by a multimodal large language model (LLM), the user inputs,
wherein the user inputs comprise text, images, and/or 3D human related data;

accessing research publications and tool documentation to guide the LLM selecting and utilizing a 3D human-related tool; and

transforming outputs from the selected 3D human-related tool into one or more formats compatible with the LLM, enabling the LLM to generate a response that integrates tool outputs with a general knowledge according to training of the LLM.

14. The device according to claim 13, the processor further configured to execute operations comprising:

retrieving one or more sections of research publications to inform the selected 3D human-related tool, the one or more sections including an abstract, an instruction, a method, and an experiment; and

presenting output from a plurality of tools as candidate tools for selecting a result, enabling the LLM to predict and select the result based on results from the candidate tools.

15. The device according to either of claims 13 or 14, the processor further configured to execute operations that supports multi-turn dialogues, enabling context-aware tool selection and utilization across multiple user interactions.

Fig. 1

Fig. 2

Fig. 3

**Instruction**: Please help me estimate the hand pose of the man in the image.

Hand Pose Estimation

<u>Node</u>

**Instruction**: Generate an image with the same pose as the person in the image, and then estimate their body shape.

Pose Estimation

Image Generation

Shape Estimation

<u>Chain</u>

**Instruction**: Generate a video of the person in the given image playing football.

Image Generation

Motion Generation

Image-to-Video Generation

<u>DAG</u>

Fig. 4

Please estimate the BMI of the person in the image.

$X_q$

VLM $f_\phi$

Body Shape Measurement

$Y_{\text{tool}}$

Toollib

Height: 1.65 m, Weight: 105 kg, Chest: 1.32 m, Hip: 1.28m, Waist: 1.16m

Transform $\psi$

$Y_{\text{m}}$

The BMI of the person is 38.6.

$Y_t$

Fig. 5

Please estimate the 3D body pose of the person in the image.

$X_q$

VLM $f_\phi$

Body Pose Estimation

$Y_{\text{tool}}$

Toollib

Transform $\psi$

$Y_{m1}, Y_{m2}$

The result of tool 2 is better. Here is the pose of the person.

$Y_t$

Fig. 6

Fig. 7

Please generate a video of a woman in a sliver dress waving hands.

Here is the generated video.

Thought: Do I need to use a tool? **Yes**
Action: Text-to-Image Generation
Input: a woman in a sliver dress

Thought: Do I need to use a tool? **Yes**
Action: Text-to-Motion Generation
Input: A person is waving hands

Thought: Do I need to use a tool? **Yes**
Action: Image-to-Video Generation
Input: image_path, motion_path

Thought: Do I need to use a tool? **No**
Observation: Here is the generated video

Fig. 8

(a) Tool generates unreasonable output    (b) Tool generates reasonable output

Fig .9

Fig. 10

EP 4 636 652 A1

(a) Ground Truth: 1.96 m tall and weighs 90.7 kg

(b) Ground Truth: 1.75 m tall and weighs 60.3 kg

Fig. 11

Fig. 12

Human: From the quartet of poses in the image, select the one that best aligns with the pose description. Pose Description: He is balancing on his right foot with his knee slightly bent. His left leg is extended out straight in front of him with his knee slightly bent. Both arms are elevated about face height with his left elbow slightly bent. He appears to be looking upward slightly.

Assistant: Pose B best matches the provided pose description.

(a) Text-to-Pose Selection

Human: Please identify the most fitting text description for the pose in this image.
(A) The person is standing on their left leg with the right leg raised level with the hip and the knee bent so that the lower leg crosses the body and the foot is in front of the left leg. The left arm is raised.
(B) They are balancing mainly on their right leg which is bent with their foot flat but pointed outwards also. Their left leg is fully outstretched in front of them with half their foot off the ground.
(C) This person is bent over and on all fours as if they are crawling. Both legs are bent at the knees, with the left foot slightly in front of the right foot. The arms are extended slightly forward.
(D) This person is standing, slightly bending their body to the right. The hands are placed on the abdominal region.

Assistant: Description A best matches the pose in the image.

(b) Pose-to-Text Selection

Fig. 13

Human: Please describe the interaction between the person and any objects in as much detail as possible. The contact region detected by DECO are: right hand, left foot, right foot. Notably, the provided contact regions might not be complete and you should detect all the contact regions by yourself.

Assistant: The person is holding a tennis racket with his right hand, and his stance indicates that he may be in the action of swinging at a tennis ball. Both feet are planted on the ground, providing stability for the action he is performing.

Human: Are both feet of the person touching the ground or any object? The contact region detected by DECO are: right upper leg, left foot, back, right foot, left hand, right hand, left upper leg, hips. Notably, the provided contact regions might not be complete and you should detect all the contact regions by yourself.

Assistant: Yes, both the left and the right feet of the person are touching the ground.

Fig. 14

Human: what would be the appropriate clothes size for this person? Clues from tool: height: 1.65 m, weight: 65 kg, chest circumference: 1.03 m, waist circumference: 0.87 m, hips circumference: 1.24 m. Please note that these clues are provided as references and may not be entirely accurate.

Assistant: I would recommend a clothes size of L for the person.

Human: What is the body height and mass of the person in the image? Clues from tool: height: 1.82 m, weight: 80.2 kg, chest circumference: 1.03 m, waist circumference: 0.89 m, hips circumference: 1.01 m. Please note that these clues are provided as references and may not be entirely accurate.

Assistant: The person is about 1.98 m, 87.3 kg.

Fig. 15

User Query

User Query

User Input:
Images/sdjsyu.png, Please show the angles
and pose of the person's body in this photo?
Response:
Thought: Do I need to use a tool? Yes
Action: Body Pose Estimation
Input: images/sdjsyu.png

User Input:
Images/ghsdvw.png, Please create an
avatar of the person in the image.
Response:
Thought: Do I need to use a tool? Yes
Action: Body Pose Estimation
Input: images/ ghsdvw.png

Retrieved Example

Retrieved Example

Fig. 16

FIG.17

**Input Query 202**

**Input Text 210**

(Please estimate the hand pose of the woman who is holding a yellow plate in a photo.)

**Input Image 212**

(images/ group.png; a group photo including the woman )

**Encoded Input Data 214**

**3D Human Understanding Agent 108**

Tool Documents 130

Paper-based Retrieval-Augmented Generation (RAG) 224

Tool-conditioned Transformation 230 (textual and visual forms)

**Tool Parameters 226**

*Similar Example from Tool Document:*
*User Input*: Images/abc.png, Help me predict the hand pose of the boy who is catching a bottle
*Response:*
Thought: Do I need to use a tool? Yes
Action: Described Person Hand Pose Estimation
Input: images/abc.png, boy catching a bottle

**Tool-specific Output Results 228**

Thought: Do I need to use a too? Yes
Action: Described Person Hnad Pose Estimation
Input: Image/abc.png, the woman holding a yellow plate

3D Human Analysis Tool 106

**Output Response 204**

**Output Text 240**

**Output Image 242**

**Output Encoded Data 246**

200

FIG. 18

300

Documents on 3D Human
Analysis Tools
302

Functions of respective tools
Data Protocol of respective tools

Tool Document
Generator 304

Large Language Model
(a pretrained text
embedding model)
306

Tool Documents
130
(Auxiliary
knowledge base)

("<tool name>: <usage scenario>,
<arguments>", paper content
about the tool.

FIG. 19

400

| Tool Description<br>402 | Tool Publication<br>404 | Image Content<br>406 | Tool Results<br>408 | 3D Human Ground Truth<br>Labels 410 |

Large Language Model 412

Training Data 414

| Tool Usage Instruction-following Data 420 | Tool Feedback Instruction-following Data (discrimination) 422 | Tool Feedback Instruction-following Data (integration) 424 |
|---|---|---|
| ... based on image content, tool description, and tool publication<br>*Prompt Example:*<br>*Prefix Prompt:*<br>**Human**: Provide an image named <image path><br>Description: <image caption><br>AI: Received.<br>Example: <retrieved example image><br>New input: <User input><br>*Suffix Prompt:*<br>**Assistant**:<br>Thought: Do I need to use a tool? Yes.<br>Action: <Tool Name><br>Action Input: <arguments><br>Observation: <Tool output> | ...Based on image content, tool results, and ground truth labels<br>*Prompt Example (with discrimination rule):*<br>**Human**: Please prepare the pose estimation results of Tool A and Tool B. Assess which one of the two output results more accurately replicates the pose and shape of the human figure in the original image, taking into account their alignment and resemblance.<br>**Assistant**: Tool B's result is better.<br>Prompt Example (integration)<br><input query><br><output results from tools><br><ground truth label as an integrated result> | ...for multi-turn conversations, based on image content, tool-related prompt ("<tool name>: <usage scenario>, <arguments>"), and paper content about the tool.<br>*Prompt Example:*<br>**Human**: Describe the Human-Object-Interaction (HOI) contact regions of the man in a given image. The contact regions detected by tools are: left foot, right foot, left hand, right hand.<br>**Assistant**: His right hand is in contact with the handle of a cooking tool, while his left hand is in contact with a bottle. His left and right feet are in contact with the ground. |

FIG. 20

500

502 START

504 Generate Training Data

506 Generate Tool Documents

508 Finetune a large language model

510 Receive Input Query

512 Generate a 3D Human Description as a Response to Given Input

514 Present the response

516 END

FIG. 21

600

602 START

604 Receive Input Query for describing a 3D human

606 Select and generate input data for one or more 3D Human Analysis tools based on Tool Documents

608 Execute the selected one or more 3D Human Analysis Tools to Generate output results from the respective tools based on the Input Query

610 Receive output results from respective 3D Human Analysis Tools

612 Generate a response by using a finetuned LLM (discrimination and integration of output results)

614 Present the response to the input query

616 END

FIG. 22

700

708
Removable Storage

706

704

710
Non-Removable Storage

System Memory

702

Instructions For Analyzing Sentiment

712
Output Devices

Processing Unit(s)

Volatile

714
Input Devices

716
Communication Connection(s)

Non-Volatile

FIG. 23

You are an AI visual assistant tasked with analyzing a paper on a method in the field of 3D human modeling. Your goal is to extract key information about the method—its name, purpose, uses, and potential application scenarios. Based on this, you need to succinctly define the method in the following formats "Method name is a tool to do something. Useful when you want to do something. Like: user query."

Subsequently, craft 50 diverse, realistic user prompts that indirectly pertain to using this method. These queries should be framed as questions, demands, or scenarios from consumers who are unaware of the method's name but whose needs align with its capabilities. Assume that consumers have an image and seek assistance in achieving a task related to the image using this method. Each prompt should introduce the task of the user in an imperative tone. The prompt should specify and refer to the image.

Here is one example:

Method definition: name="HMR2.", description="HMR2.0 is a tool to estimate the 3D pose and shape of the person in the image. Useful when you want to detect poses of the humans in the image. Like: estimate the human poses in the image."

Possible queries:
1. Can you help me estimate the pose of the person in the photo?
2. Please reconstruct a 3D avatar for the person in the image.
3. Could you please estimate the SMPL parameter of the man in the picture?
4. Someone in the image is riding a bicycle, could you please help me estimateher pose?

Fig. 24

Given an image whose image path is "example.jpg". Image caption: "{caption}". The image caption includes detail image description and each object paired with the bounding box [x1, y1, x2, y2]. For the bounding box, (x1, y1) refers to the top left, and (x2, y2) refers to the bottom right. x1 is less than x2, and y1 is less than y2.

Below are 26 visual tools. Each tool is defined as "tool name: usage scenario, and tool arguments".

Please generate 3 visual instructions for each tool, so you need to generate 66 visual instructions in total.
The generated instructions should follow the format of "instruction content, [tool name, tool arguments]".
Each instruction must relate to the caption and can be solved by the tool.
You can not revise the "tool name", or add any other fake tools that are not defined. You must keep the correct "tool arguments".

Tools: {tool description}

Note that your generated visual instructions should be highly related to the image caption. Directly reply to me with the list, here are some examples: {examples}

Diversify the instructions to cover a wide range of possible user queries. Feel free to adapt and rephrase the examples provided to generate diverse, complex, and deceptive instructions as much as possible.
For example, you can also change the subject position or the person and pose description positions. Don't use too much imperative sentence, you should also use interrogative sentences.

Fig. 25

You are an AI visual assistant, and you are seeing a single image and a sentence about the human-object contact regions of the person in the image. The sentence include the human-object contact body parts of the person. Notably, the provided contact regions might not be complete and you should detect all the contact regions by yourself.

Design a conversation between you and a person asking about the human-object contact information of the person. The answers should be in a tone that a visual AI assistant is seeing the image and answering the question. Ask diverse questions and give corresponding answers.

Include questions asking about the person's human-object contact information, etc. Only include questions that have definite answers: (1) one can see the content in the image that the question asks about and can answer confidently; (2) one can determine confidently from the image that it is not in the image. Do not ask any questions that cannot be answered confidently.

Provide detailed answers when answering complex questions. In your answer, you should imitate as if you see the image and the contact regions are estimated by you. You should only ask questions about the human-object interaction. The answer should be as detailed as possible. Don't mention any other irrelevant information! Directly reply to me with a list, here are some examples:
1. Please help me detect the contact regions of the person in the image. [Theperson's contact region includes his feet, hands, and back. His feet touch the ground and his hands are holding a mobile phone.]
2. Does the person's hand contact any objects? [Yes, her right hand holds anumbrella.]
3. Describe the human-object interaction information of the person, as detailedas possible. [The person holds a phone with his left hand and stands on a skateboard with both their left and right feet.]

Notably, at least one question is to ask all the contact regions of the person. In your answer, you should distinguish and specify the left and right body parts. Notably, you should distinguish based on the body pose and orientation. If the person is facing the camera, the hand, foot, and ear on the left side of the image is the person's right hand, right foot, and right ear, and the one on the right side of the image is the person's left hand, left foot, and left ear. If the person has their back to the camera, the one on the left side of the image is the person's left body part, and the one on the right side of the image is the person's right body part.

Fig. 26

You are an AI visual assistant, and you are seeing a single image. What you see are provided with a sentence, describing the body shape of the person in the image. Answer all questions as you are seeing the image.

The sentence includes information about the person's gender, body mass, height, chest circumference, waist circumference, and hip circumference. Besides, it includes 15 linguistic shape attributes scale from 1 (strongly disagree) to 5 (strongly agree).

Design a conversation between you and a person asking about the body shape of the person. The answers should be in a tone that a visual AI assistant is seeing the image and answering the question. Ask diverse questions and give corresponding answers.

Include questions asking about the visual content of the image, including the person's overall body fit, shape, height, mass, etc. Only include questions that have definite answers:

(1) one can see the content in the image that the question asks about and can answer confidently;

(2) one can determine confidently from the image that it is not in the image. Do not ask any questions that cannot be answered confidently.

Provide detailed answers when answering complex questions. When the question is about the measurement, provide an explicit and concrete metric number in the answer.

In your answer, you should imitate as if you see the image and the measurements and linguistic attributes are estimated by you. The linguistic attribute score is only used to help you understand and don't mention it in your answer.

Directly reply to me with a list, here are some examples:
1.  How tall is the person in the image? [The person looks quite tall. He is about 1.85 m.]
2.  Please help me estimate the body measurements of the man in the image. [The man is about 1.74 m and 60 kg. His chest circumference is about 0.9 m.]
3.  What's the waist circumference of the person? [The chest circumference isabout 0.95 m.]

Fig. 27

Given an image whose image path is "example.jpg". Image caption: "{caption}". The image caption includes detail image description and each object paired with the bounding box [x1, y1, x2, y2]. For the bounding box, (x1, y1) refers to the top left, and (x2, y2) refers to the bottom right. x1 less than x2, and y1 less than y2.

Below are 26 visual tools. Each tool is defined as "tool name: usage scenario, and arguments to tool".

Please generate 10 instructions that will need multiple tools to finish. The generated instructions should follow the format of "instruction content, [[tool name1, arguments to tool1], [tool name2, arguments to tool2], ...]". Each instruction must relate to the caption and can be solved by the tool. You can not revise the "tool name", or add any other fake tools that is not defined. You must keep the correct "arguments to tool".

Tools: {tool description}

Note that you should use 1-5 tools in each instruction and your generated visual instructions should be highly related to the image caption. Directly reply to me
with the list, here are some examples: {examples}

Diversify the instructions to cover a wide range of possible user queries. Feel free to adapt and rephrase the examples provided to generate diverse, complex, and deceptive instructions as much as possible.
For example, you can also change the subject position or the person and pose description positions. Don't use too much imperative sentence, you should also use interrogative sentence.

Fig. 28

Europäisches
Patentamt
European
Patent Office
Office européen
des brevets

# EUROPEAN SEARCH REPORT

**Application Number**

EP 25 17 1474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YONGLIANG SHEN ET AL: "HuggingGPT: Solving AI Tasks with ChatGPT and its Friends in Hugging Face", ARXIV.ORG, CORNELL UNIVERSITY LIBRARY, 201 OLIN LIBRARY CORNELL UNIVERSITY ITHACA, NY 14853, 25 May 2023 (2023-05-25), XP091518108, * Sections 1, 3 * * Appendix A.1.1-A.1.4 * * tables 1,2, 11 * * figures 1,2,8,9 * | 1-15 | INV. G06N3/08 G06N20/00 |
| A | SHISHIR G PATIL ET AL: "Gorilla: Large Language Model Connected with Massive APIs", ARXIV.ORG, CORNELL UNIVERSITY LIBRARY, 201 OLIN LIBRARY CORNELL UNIVERSITY ITHACA, NY 14853, 24 May 2023 (2023-05-24), XP091518393, * Sections 1, and 3 * | 1-15 | |
| A | Feng Yao ET AL: "PoseGPT: Chatting about 3D Human Pose", , 30 November 2023 (2023-11-30), pages 1-17, XP093305723, Retrieved from the Internet: URL:https://arxiv.org/pdf/2311.18836v1 * Sections 1, and 3 * | 1-15 | TECHNICAL FIELDS SEARCHED (IPC) G06N |
| T | JING LIN ET AL: "ChatHuman: Language-driven 3D Human Understanding with Retrieval-Augmented Tool Reasoning", ARXIV.ORG, CORNELL UNIVERSITY LIBRARY, 201 OLIN LIBRARY CORNELL UNIVERSITY ITHACA, NY 14853, 7 May 2024 (2024-05-07), XP091750137, * the whole document * | 1-15 | |

The present search report has been drawn up for all claims

| Place of search | Date of completion of the search | Examiner |
|---|---|---|
| The Hague | 27 August 2025 | Mariani, Giovanni |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63635817

**Non-patent literature cited in the description**

- **BLACK, M. J.** ; **PATEL, P.** ; **TESCH, J.** ; **YANG, J.** Bedlam: A synthetic dataset of bodies exhibiting detailed lifelike animated motion. *Proceedings of the IEEE/CVF Conference on Computer Vision and Pattern Recognition*, 2023, 8726-8737
- **BOGO, F.** ; **KANAZAWA, A.** ; **LASSNER, C.** ; **GEHLER, P.** ; **ROMERO, J.** ; **BLACK, M. J.** Keep it SMPL: Automatic estimation of 3D human pose and shape from a single image. *ECCV*, 2016
- **CHASE, H.** ; **CONTRIBUTORS, L.** *Langchain*, 2022
- **CHIANG, W.-L.** ; **LI, Z.** ; **LIN, Z.** ; **SHENG, Y.** ; **WU, Z.** ; **ZHANG, H.** ; **ZHENG, L.** ; **ZHUANG, S.** ; **ZHUANG, Y.** ; **GONZALEZ, J. E.** *Vicuna: An open-source chatbot impressing gpt-4 with 90%\* chatgpt quality*, 2023
- **CHOUTAS, V.** ; **MÜLLER, L.** ; **HUANG, C.-H. P.** ; **TANG, S.** ; **TZIONAS, D.** ; **BLACK, M. J.** Accurate 3d body shape regression using metric and semantic attributes. *Proceedings of the IEEE/CVF Conference on Computer Vision and Pattern Recognition*, 2022, 2718-2728
- **DELMAS, G.** ; **WEINZAEPFEL, P.** ; **LUCAS, T.** ; **MORENO-NOGUER, F.** ; **ROGEZ, G.** Posescript: 3d human poses from natural language. *ECCV*, 2022
- **DELMAS, G.** ; **WEINZAEPFEL, P.** ; **MORENO-NOGUER, F.** ; **ROGEZ, G.** Posefix: Correcting 3d human poses with natural language.. *Proceedings of the IEEE/CVF International Conference on Computer Vision*, 2023, 15018-15028
- **FENG, Y.** ; **FENG, H.** ; **BLACK, M. J.** ; **BOLKART, T.** Learning an animatable detailed 3d face model from in-the-wild images. *ACM Transactions on Graphics*, 2021, vol. 40 (4), 1-13
- **FENG, Y.** ; **LIN, J.** ; **DWIVEDI, S. K.** ; **SUN, Y.** ; **PATEL, P.** ; **BLACK, M. J.** ChatPose: Chatting about 3d human pose. *CVPR*, 2024
- **GOEL, S.** ; **PAVLAKOS, G.** ; **RAJASEGARAN, J.** ; **KANAZAWA, A.** ; **MALIK, J.** Humans in 4D: Reconstructing and tracking humans with transformers. *ICCV*, 2023
- **HU, E. J.** ; **SHEN, Y.** ; **WALLIS, P.** ; **ALLEN-ZHU, Z.** ; **LI, Y.** ; **WANG, S.** ; **WANG, L.** ; **CHEN, W.** Lora: Low-rank adaptation of large language models. *arXiv:2106.09685*, 2021
- **KIRILLOV, A.** ; **MINTUN, E.** ; **RAVI, N.** ; **MAO, H.** ; **ROLLAND, C.** ; **GUSTAFSON, L.** ; **XIAO, T.** ; **WHITEHEAD, S.** ; **BERG, A. C.** ; **LO, W.-Y. et al.** Segment anything. *Proceedings of the IEEE/CVF International Conference on Computer Vision*, 2023, 4015-4026
- **LEWIS, P.** ; **PEREZ, E.** ; **PIKTUS, A.** ; **PETRONI, F.** ; **KARPUKHIN, V.** ; **GOYAL, N.** ; **KÜTTLER, H.** ; **LEWIS, M.** ; **YIH, W.-T.** ; **ROCKTÄSCHEL, T. et al.** Retrievalaugmented generation for knowledge-intensive nlp tasks. *Advances in neural information processing systems*, 2020, vol. 33, 9459-9474
- **LI, Z.** ; **LIU, J.** ; **ZHANG, Z.** ; **XU, S.** ; **YAN, Y.** CLIFF: Carrying location information in full frames into human pose and shape estimation. *ECCV*, 2022
- **LIN, K.** ; **WANG, L.** ; **LIU, Z.** End-to-end human pose and mesh reconstruction with transformers. *Proceedings of the IEEE/CVF conference on computer vision and pattern recognition*, 2021, 1954-1963
- **LIN, T.-Y.** ; **MAIRE, M.** ; **BELONGIE, S. J.** ; **HAYS, J.** ; **PERONA, P.** ; **RAMANAN, D.** ; **DOLLÁR, P.** ; **ZITNICK, C. L.** Microsoft coco: Common objects in context. *ECCV*, 2014
- **LIU, H.** ; **LI, C.** ; **WU, Q.** ; **LEE, Y. J.** Visual instruction tuning. *NeurIPS*, 2023
- **LOPER, M.** ; **MAHMOOD, N.** ; **ROMERO, J.** ; **PONS-MOLL, G.** ; **BLACK, M. J.** SMPL: A skinned multi-person linear model. *ACM TOG*, 2015
- **LOSHCHILOV, I.** ; **HUTTER, F.** Decoupled weight decay regularization. *arXiv preprint arXiv:1711.05101*, 2017
- **MATL, M.** *Pyrender*, 2019, https://github.com/mmatl/pyrender
- OpenAI. *GPT-4 technical report*, 2023
- **PETROVICH, M.** ; **BLACK, M. J.** ; **VAROL, G.** TMR: Textto-motion retrieval using contrastive 3D human motion synthesis. *International Conference on Computer Vision (ICCV)*, 2023

- Learning transferable visual models from natural language supervision. **RADFORD, A.** ; **KIM, J. W.** ; **HALLACY, C.** ; **RAMESH, A.** ; **GOH, G.** ; **AGARWAL, S.** ; **SASTRY, G.** ; **ASKELL, A.** ; **MISHKIN, P.** ; **CLARK, J. et al.** International conference on machine learning. PMLR, 2021, 8748-8763
- **RASLEY, J.** ; **RAJBHANDARI, S.** ; **RUWASE, O.** ; **HE, Y.** Deepspeed: System optimizations enable training deep learning models with over 100 billion parameters. *arXiv preprint arXiv:2002.11681*, 2020
- **RASLEY, J.** ; **RAJBHANDARI, S.** ; **RUWASE, O.** ; **HE, Y.** Visual chatgpt: Talking, drawing and editing with visual foundation models. *arXiv preprint arXiv:2303.04671*, 2023
- **ROMBACH, R.** ; **BLATTMANN, A.** ; **LORENZ, D.** ; **ESSER, P.** ; **OMMER, B.** High-resolution image synthesis with latent diffusion models. *Proceedings of the IEEE/CVF conference on computer vision and pattern recognition*, 2022, 10684-10695
- **SHEN, Y.** ; **SONG, K.** ; **TAN, X.** ; **ZHANG, W.** ; **REN, K.** ; **YUAN, S.** ; **LU, W.** ; **LI, D.** ; **ZHUANG, Y.** Taskbench: Benchmarking large language models for task automation. *arXiv preprint arXiv:2311.18760*, 2023
- **SHIN, S.** ; **KIM, J.** ; **HALILAJ, E.** ; **BLACK, M. J.** Wham: Reconstructing world-grounded humans with accurate 3d motion. *CVPR*, 2024
- **SU, H.** ; **SHI, W.** ; **KASAI, J.** ; **WANG, Y.** ; **HU, Y.** ; **OSTENDORF, M.** ; **YIH, W.-T.** ; **SMITH, N. A.** ; **ZETTLEMOYER, L.** ; **YU, T.** One embedder, any task: Instruction-finetuned text embeddings. *arXiv preprint arXiv:2212.09741*, 2022
- **SWELLER, J.** ; **AYRES, P.** ; **KALYUGA, S.** Cognitive Load Theory. Springer, 2011
- **TRIPATHI, S.** ; **CHATTERJEE, A.** ; **PASSY, J.-C.** ; **YI, H.** ; **TZIONAS, D.** ; **BLACK, M. J.** Deco: Dense estimation of 3d human-scene contact in the wild. *Proceedings of the IEEE/CVF International Conference on Computer Vision*, 2023, 8001-8013
- **TRIPATHI, S.** ; **MÜLLER, L.** ; **HUANG, C.-H. P.** ; **TAHERI, O.** ; **BLACK, M. J.** ; **TZIONAS, D.** 3d human pose estimation via intuitive physics. *Proceedings of the IEEE/CVF Conference on Computer Vision and Pattern Recognition*, 2023, 4713-4725
- **VON MARCARD, T.** ; **HENSCHEL, R.** ; **BLACK, M. J.** ; **ROSENHAHN, B.** ; **PONS-MOLL, G.** Recovering accurate 3D human pose in the wild using IMUs and a moving camera. *ECCV*, 2018
- **YANG, R.** ; **SONG, L.** ; **LI, Y.** ; **ZHAO, S.** ; **GE, Y.** ; **LI, X.** ; **SHAN, Y.** GPT4Tools: Teaching llm to use tools via self-instruction. *arXiv preprint arXiv:2305.18752*, 2023
- **YANG, Z.** ; **LIU, J.** ; **HAN, Y.** ; **CHEN, X.** ; **HUANG, Z.** ; **FU, B.** ; **YU, G.** Appagent: Multimodal agents as smartphone users. *arXiv preprint arXiv:2312.13771*, 2023
- **YE, S.** ; **LAUER, J.** ; **ZHOU, M.** ; **MATHIS, A.** ; **MATHIS, M.** Amadeusgpt: a natural language interface for interactive animal behavioral analysis. *Advances in neural information processing systems*, 2023, vol. 36, 6297-6329
- **ZHU, S.** ; **CHEN, J. L.** ; **DAI, Z.** ; **XU, Y.** ; **CAO, X.** ; **YAO, Y.** ; **ZHU, H.** ; **ZHU, S.** *Champ: Controllable and consistent human image animation with 3d parametric guidance*, 2024